# EUROPEAN PATENT SPECIFICATION

(11) **EP 2 672 774 B1**
(45) Date of publication and mention of the grant of the patent: **26.04.2017**
(21) Application number: 12741706.1
(22) Date of filing: 01.02.2012
(51) Int. Cl.: H04W 4/00, H04W 56/00, G08B 25/00, H04W 84/18, H04W 74/04, H04L 29/08, G08B 25/10

(54) **WIRELESS COMMUNICATION SYSTEM**
DRAHTLOSES KOMMUNIKATIONSSYSTEM
SYSTÈME DE COMMUNICATION SANS FIL

(30) Priority: 02.02.2011 JP 2011020790
(43) Date of publication of application: 11.12.2013
(73) Proprietor: Panasonic Intellectual Property Management Co., Ltd., Osaka-shi, Osaka 540-6207 (JP)
(72) Inventor: KURITA, Masanori, Chuo-ku Osaka 540-6207 (JP); SUZUKI, Junichi, Chuo-ku Osaka 540-6207 (JP)
(74) Representative: Müller-Boré & Partner Patentanwälte PartG mbB
(86) International application number: PCT/JP2012/052297
(87) International publication number: WO 2012/105614

(56) References cited:
- EP-A1- 1 855 260
- WO-A2-2010/018517
- JP-A- 9 023 280
- JP-A- 2004 127 176
- JP-A- 2009 065 337
- JP-A- 2010 226 569
- US-A1- 2005 090 200
- US-A1- 2010 079 278

## Description

### Technical Field

The present invention relates to wireless communication systems constituted by a plurality of (multiple) wireless devices.

### Background Art

Document 1 (JP 3140581 U) discloses a wireless LAN system exemplifying prior wireless communication systems. In this prior instance, a plurality of access points (corresponding to wireless devices serving as masters) are connected to a hub of a wired LAN system via LAN cables and each access point is connected wirelessly to one or more slaves (corresponding to wireless devices serving as slaves) of a wireless LAN system. Further, each of the respective access point is housed in a mounting base of a fire sensor mounted on a ceiling.

As another prior instance, document 2 (JP 2009-265940 A) discloses a fire alarm system. This prior system includes a plurality of fire alarm devices respectively serving as wireless devices. When any fire alarm device detects a fire, the fire alarm device which detects the fire notifies other fire alarm devices of a fire occurrence through wireless communication. Thus, all the fire alarm devices including the fire alarm which detects a fire as well as the other fire alarm devices cooperate to announce a fire occurrence. Therefore, a fire occurrence can be announced immediately and successfully.

The wireless communication system disclosed in document 1 and the fire alarm system disclosed in document 2 can be combined. For example, the fire alarm systems installed in respective residences of a condominium are connected to a monitoring device (fire receiver) installed in a management room of the condominium via wires. When a fire occurs at any of the residences, the fire alarm system of this residence notifies the monitoring device of a fire occurrence. Thereafter, the monitoring device announces the fire occurrence to the residences other than the residence suffering from the fire. When the monitoring device announces the fire occurrence to the residences other than the residence suffering from the fire, all the fire alarm systems including the fire alarm system which detects the fire as well as the other fire alarm systems cooperate to announce the fire occurrence. Therefore, it is possible to announce the fire occurrence immediately and successfully to all the residences of the condominium.

In this regard, the fire alarm system installed in each residence includes a master connected to the monitoring device via a wire and a plurality of slaves configured to perform wireless communication with the master. To utilize an advantage that the slave can communicate without using wires, the slave is configured to operate using a battery as a power source. Further, to prolong a lifetime of the battery, the slave is configured to perform intermittent reception. Meanwhile, the master is configured to receive power supplied from a commercial power source. The master is configured to normally wait for receiving a wireless signal announcing a fire occurrence sent from the slave. Further, the master sends (broadcasts) a wireless signal periodically (e.g., once a day). The master receives responses from the slaves which receive this wireless signal, thereby monitoring the lifetime of each slave and checking whether each slave has failed.

However, there is a probability that a wireless signal (electric wave) sent from the master installed in a residence in the condominium reaches an adjacent residence and interferes with a wireless signal sent from the master installed in this adjacent residence. In view of this, the prior art uses different frequency channels in the fire alarm systems installed in the adjacent residences. Hence, interference between the wireless signals of the fire alarm systems can be suppressed.

However, a frequency band for wireless signals available for a fire alarm system is regulated by law (Japanese radio law). The number of frequency channels available for each fire alarm system is few, and an interval between channels is only several tens kilo hertz. Therefore, in some cases, a difference between electrical power regarding a regular frequency channel received by a slave and adjacent channel leakage power regarding another channel different from the regular channel is relatively small. In these cases, interference between the wireless signals of the fire alarm systems cannot be suppressed.

Document 3 (WO 2010/018517 A2) discloses a method for controlling access to a wireless medium in a network. The method comprises dividing an access time to the wireless medium into fixed and repeated time rounds, wherein each time round includes a plurality of superframes and each superframe includes a fixed number of time slots. The method comprises further allocating a global beacon period within a time round and reserving subframes within each superframe, wherein master devices can access the wireless medium during the reserved subframes.

Document 4 (US 2005/090200 A1) discloses a method for synchronizing UWB piconets for SOP (Simultaneously Operating Piconet) performance. A common backbone provides a common clock signal (CLK) to all of the piconet coordinators (PNCs) of the piconets that may operate within a sufficiently close region so that interference could undesirably occur. By providing a very reliable clock signal from a common backbone to all of the piconet coordinators of the various piconets operating within a substantially close proximity to one another, very precise synchronization may be ensured for all of the communications performed therein.

### Summary of Invention

In view of the above insufficiency, the present invention has aimed to suppress interference between wireless signals.

The wireless communication system of the first aspect in accordance with the present invention includes a plurality of subsystems. Each of the plurality of subsystems includes a single master and a slave configured to perform wireless communication with the master. The master is configured to send a first wireless signal in a first period common to the plurality of subsystems and to wait for receiving a second wireless signal in a second period which is subsequent to the first period and is common to the plurality of subsystems. The slave is configured to, when receiving the first wireless signal, send the second wireless signal in the second period. The master is configured to send the first wireless signal in a period which is included in the first period but is different from that for the master of another subsystem.

With regard to the wireless communication system of the second aspect in accordance with the present invention, in addition to the first aspect, different frequency channels are respectively allocated to the plurality of subsystems. The slave is configured to send the second wireless signal via the frequency channel allocated to the subsystem including this slave.

With regard to the wireless communication system of the third aspect in accordance with the present invention, in addition to the second aspect, the master is configured to send the first wireless signal via the frequency channel allocated to the subsystem including this master.

With regard to the wireless communication system of the fourth aspect in accordance with the present invention, in addition to any one of the first to third aspects, the slave is configured to, each time a predetermined rest period elapses, judge whether the first wireless signal exists. The slave is configured to, when concluding that the first wireless signal exists, start to receive the first wireless signal. The slave is configured to, based on a timing at which the slave receives the first wireless signal, adjust a start timing which is defined as a timing at which the slave starts the rest period, such that the start timing coincides with the start timing of another slave belonging to the subsystem including the former slave.

With regard to the wireless communication system of the fifth aspect in accordance with the present invention, in addition to the fourth aspect, the master is configured to communicate with a master included in a different subsystem via a communication line. The master is configured to determine a period for sending the first wireless signal within the first period, based on information obtained from the different subsystem via the communication line.

With regard to the wireless communication system of the sixth aspect in accordance with the present invention, in addition to any one of the first to fifth aspects, the master is configured to, when receiving instructions to send the first wireless signal, send the first wireless signal based on a timing of receiving the instructions.

With regard to the wireless communication system of the seventh aspect in accordance with the present invention, in addition to any one of the first to sixth aspects, each of the subsystems includes the plurality of slaves. The master is configured to prepare a plurality of time slots in the second period. The master is configured to allocate the time slot to the slave included in the subsystem to which the master belongs. The slave is configured to send the second wireless signal to the master included in the subsystem to which the slave belongs, by use of the allocated time slot. The master is configured to judge whether a no-reply slave exists with regard to the slaves included in the subsystem to which the master belongs. The no-reply slave is defined by the slave that sends the second wireless signal which the master fails to receive. The master is configured to, when concluding that the no-reply slave exists, change the time slot for the no-reply slave to an alternative time slot.

With regard to the wireless communication system of the eighth aspect in accordance with the present invention, in addition to the seventh aspect, the master is configured to select the alternative time slot from the plurality of time slots randomly.

With regard to the wireless communication system of the ninth aspect in accordance with the present invention, in addition to the seventh aspect, the master is configured to select, as the alternative time slot, the time slot adjacent to the time slot allocated to the no-reply slave.

With regard to the wireless communication system of the tenth aspect in accordance with the present invention, in addition to the seventh aspect, the master is configured to, when concluding that the no-reply slave exists, exchange the time slot for the no-reply slave and the time slot allocated to the slave that sends the second wireless signal which the master successfully receives.

With regard to the wireless communication system of the eleventh aspect in accordance with the present invention, in addition to the tenth aspect, the master is configured to measure a reception level of the second wireless signal. The master is configured to, when concluding that the no-reply slave exists, exchange the time slot for the no-reply slave and the time slot allocated to the slave associated with the second wireless signal having the highest reception level.

With regard to the wireless communication system of the twelfth aspect in accordance with the present invention, in addition to the seventh aspect, the plurality of time slots include a spare time slot which is not allocated to any slave. The master is configured to select the spare time slot as the alternative time slot.

With regard to the wireless communication system of the thirteenth aspect in accordance with the present invention, in addition to the seventh aspect, the master is configured to judge whether non-electric-wave period is present in the second period, the non-electric-wave period being defined as a period in which any slave in other subsystems sends no second wireless signal. The master is configured to, when concluding that the non-electric-wave period is present in the second period, select the time slot corresponding to the non-electric-wave period as the alternative time slot.

With regard to the wireless communication system of the fourteenth aspect in accordance with the present invention, in addition to the seventh aspect, the master is configured to measure a reception level of the second wireless signal from the slave belonging to another subsystem in the second period. The master is configured to judge whether a low electric wave period in which the measured reception level is not greater than a predetermined threshold is present in the second period. The master is configured to, when concluding that the low electric wave period is present in the second period, select the time slot corresponding to the low electric wave period as the alternative time slot.

With regard to the wireless communication system of the fifteenth aspect in accordance with the present invention, in addition to any one of the first to fourteenth aspects, the subsystem includes a relay configured to relay the first wireless signal from the master to the slave. The relay is configured to, when receiving the first wireless signal from the master included in the subsystem to which this relay belongs, send the first wireless signal to the slave during an interval period for the first wireless signal. The interval period is defined as a period starting from time at which the master included in the subsystem to which the relay belongs completes sending the first wireless signal and ending on time at which the next master starts to send the first wireless signal.

### Brief Description of the Drawings

**FIG. 1** is a time chart illustrating the operation of the wireless communication system of the first embodiment;
**FIG. 2** is a diagram illustrating the configuration of the wireless communication system of the first embodiment;

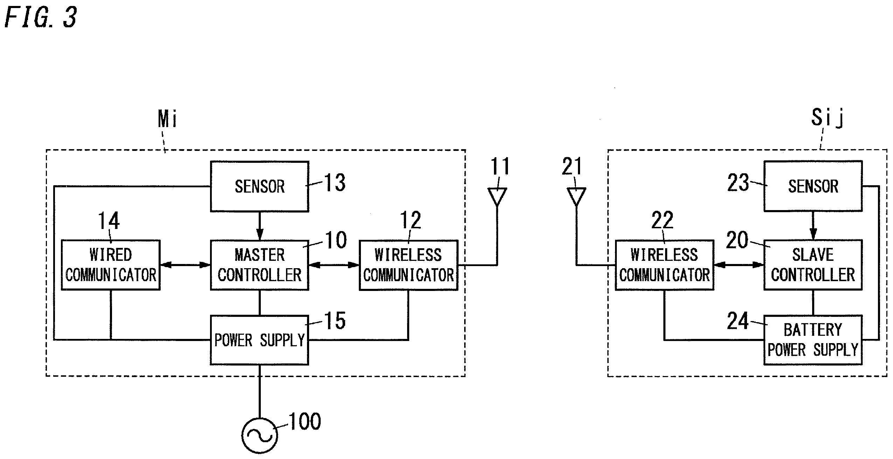

**FIG. 3** is a block diagram illustrating the master and the slave of the wireless communication system of the first embodiment;
**FIG. 4** is a diagram illustrating the frame format of the wireless signal in the above fire alarm system;
**FIG. 5** is a time chart illustrating the operation of the wireless communication system of the first embodiment;
**FIG. 6** is a diagram illustrating interference between the wireless signals in the wireless communication system of the first embodiment;
**FIG. 7** is a diagram illustrating how to change the slot number in the wireless communication system of the first embodiment;
**FIG. 8** is a diagram illustrating how to change the slot number in the wireless communication system of the first embodiment;
**FIG. 9** is a diagram illustrating how to change the slot number in the wireless communication system of the first embodiment;
**FIG. 10** is a diagram illustrating how to change the slot number in the wireless communication system of the first embodiment;
**FIG. 11** is a diagram illustrating how to change the slot number in the wireless communication system of the first embodiment;
**FIG. 12** is a time chart illustrating the operation of measuring the reception level of the wireless signal in the wireless communication system of the first embodiment;
**FIG. 13** is a diagram illustrating the configuration of the wireless communication system of the second embodiment;
**FIG. 14** is a diagram illustrating the operation of the relay of the wireless communication system of the second embodiment;
**FIG. 15** is a diagram illustrating the operation of the relay of the wireless communication system of the second embodiment;
**FIG. 16** is a diagram illustrating the operation of the relay of the wireless communication system of the second embodiment;
**FIG. 17** is a diagram illustrating the configuration of the modification of the wireless communication system of the second embodiment;
**FIG. 18** is a diagram illustrating the operation of the relay of the above modification; and
**FIG. 19** is a diagram illustrating the operation of the relay of the above modification.

### Description of Embodiments

The following detailed explanation referring to drawings is made to an embodiment in which the technical concept in accordance with the present invention is applied to a fire alarm system which are described in the prior art. However, the wireless communication system to which the technical concept in accordance with the present invention is applicable is not limited to such a fire alarm system. For example, the technical concept in accordance with the present invention may be applicable to a security system employing a wireless device provided with a crime monitoring sensor configured to detect intrusion of a suspicious individual.

### (FIRST EMBODIMENT)

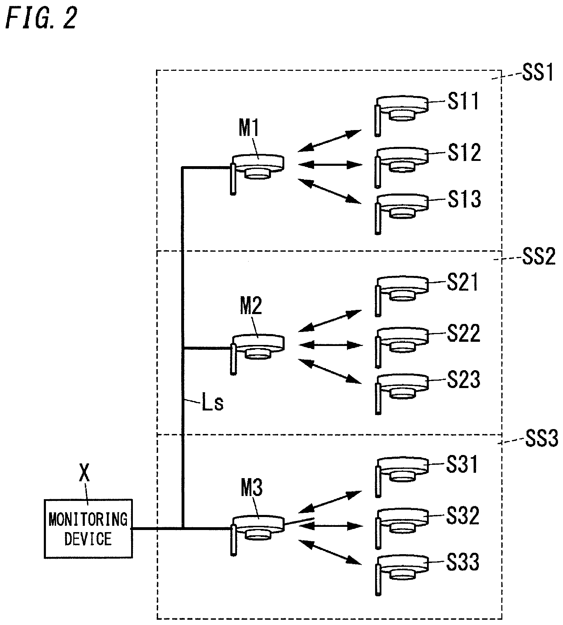

As shown in **FIG. 2****,** the fire alarm system (wireless communication system) of the present embodiment includes a plurality of (three, in the illustrated instance) subsystems **SS1** to **SS3** and a monitoring device **X** coupled to masters **M1** to **M3** of the respective subsystems **SSi (i = 1, 2, 3)** via a communication line **Ls.**

The subsystem **SSi** includes the single master **Mi** and one or more (three, in the illustrated instance) slave **Sij (i = 1, 2, 3; j = 1, 2, 3)** configured to perform wireless communication with the master **Mi.** The subsystem **SSi** may be installed in a residence of a condominium or premises of a commercial facility.

Accordingly, the wireless communication system of the present embodiment includes the plurality of (three, in the illustrated instance) masters **Mi** and the plurality of (nine, in the illustrated instance) slaves **Sij.**

Each of the plurality of masters **Mi** constitutes the subsystem **SSi** together with the slave **Sij** configured to perform wireless communication with this master **Mi.** The plurality of masters **Mi** are configured to send a first wireless signal in a first period (downlink period) **DT** and wait for receiving a second wireless signal in a second period (uplink period) **UT** subsequent to the first period (downlink period) **DT.** The plurality of masters **Mi** are configured to send the first wireless signal in turn during the first period **DT.**

Each of the slaves **Sij** is configured to send the second wireless signal in the second period (uplink period) **UT** in response to reception of the first wireless signal.

Further, the monitoring device **X** performs communication (wired communication) with each master **Mi** via the communication line **Ls**. For example, the monitoring device **X** is installed in a management room of a condominium or premises. Note that, in the present embodiment, the monitoring device **X** is installed in a condominium.

The slave **Sij** includes a slave controller **20,** an antenna **21,** a wireless communicator **22,** a sensor **23,** and a battery power supply **24,** for example.

The wireless communicator **22** transmits and receives a wireless signal via a medium defined by a radio wave in conformity with "security radio equipment for low power radio station" stated in regulations of enforcement of the Japanese Radio Act, for example. The wireless communicator **22** is configured to transmit and receive a wireless signal via a frequency channel selected from a plurality of frequency channels which are different from each other and are selected preliminarily. In the present embodiment, frequency channels are determined in conformity with "security radio equipment for low power radio station, ARIB STANDARD, RCR STD-30". For example, this standard defines twenty-four frequency channels. Occupied bandwidth of the frequency channels is from 426.2625 MHz to 426.8375 MHz, and an interval between frequency channels is **25** kHz. Note that, the plurality of frequency channels are not limited to the above instances.

The sensor **23** is a fire sensor configured to detect presence of a smoke or heat caused by a fire. Note that, in the case of a security system, the sensor **23** may be a crime-prevention sensor, such as, a human sensor having a pyroelectric device configured to detect presence of infrared emitted from a human body, and a breakage sensor configured to detect vibration of a window glass. The slave controller **20** includes a microcomputer as its primary component. When the sensor 23 detects a fire or when the slave controller **20** receives notification of fire occurrence from the master **Mi,** the slave controller **20** controls a speaker (not shown) to produce a warning sound (e.g., a buzzer sound and a voice message announcing fire occurrence), and controls the wireless communicator **22** to notify the master **Mi** of fire occurrence via wireless communication. The battery power supply **24** employs a battery (e.g., a primary battery and a secondary battery) as a power source and generates driving power for the slave controller **20,** the wireless communicator **22,** and the sensor **23** from the power source and supplies the generated driving power thereto. For the purpose of saving energy in the battery as possible, the aforementioned slaves **Sij** perform receiving operation, not always but intermittently, as mentioned below.

The master **Mi** includes a master controller **10,** an antenna **11,** a wireless communicator **12,** a sensor **13,** a wired communicator **14,** and a power supply **15,** for example.

The wireless communicator **12** transmits and receives a wireless signal via a medium defined by a radio wave in conformity with "security radio equipment for low power radio station" stated in regulations of enforcement of the Japanese Radio Act, in a similar manner as the wireless communicator **22** of the slave **Sij,** for example. The wireless communicator **12** is configured to transmit and receive a wireless signal via a frequency channel selected from a plurality of different frequency channels prepared. The wireless communicator **12** also uses frequency channels determined in conformity with "security radio equipment for low power radio station, ARIB STANDARD, RCR STD-30".

The wired communicator **14** performs wired communication with the monitoring device **X** as well as other masters **Mj** (**j** ≠ **i**) via the communication line **Ls.** The sensor **13** is a fire sensor configured to detect presence of a smoke or heat caused by a fire. Note that, in the case of a security system, the sensor **13** may be a crime-prevention sensor, such as, a human sensor having a pyroelectric device configured to detect presence of infrared emitted from a human body, and a breakage sensor configured to detect vibration of a window glass.

The master controller **10** includes a microcomputer as its primary component, in a similar manner as the slave controller **20.** When the sensor **13** detects a fire or when the master controller **10** receives notification of fire occurrence via a wireless signal from any slave **Sij,** the master controller **10** controls a speaker (not shown) to produce a warning sound (e.g., a buzzer sound and a voice message announcing fire occurrence), for example. Further, the master controller **10** performs a process (e.g., a process of starting inspection mentioned below) based on instructions received from the monitoring device **X** via the wired communicator **14,** and a process of sending notification to the monitoring device **X.** The power supply **15** converts AC power supplied from an external power source (e.g., a commercial AC power source **100**) into a DC power and supplies the resultant DC power to the master controller **10,** the wireless communicator **12,** the sensor **13,** and the wired communicator **14.** The master **Mi** operates with power provided from the external power source. Thus, differently from the slave **Sij,** the wireless communicator **12** always waits for reception of wireless signals except transmission of wireless signals.

Peculiar identifiers are respectively allocated to masters **Mi** and slaves **Sij** and are respectively stored in memories of the controllers **10** and **20.** Therefore, destinations and senders of wireless signals and wired signals can be identified. For example, the identifier is defined as a combination of a system number (identifier for the master **Mi**) "**i**" used for identifying the subsystem **SSi** and a slave number "**j**" used for identifying the slave **Sij** included in the subsystem **SSi.** For example, in a process of registration of each slave **Sij** to the master **Mi,** the master **Mi** allocates the system number "i" and the slave number "**j**", that is, an identifier to each slave **Sij.**

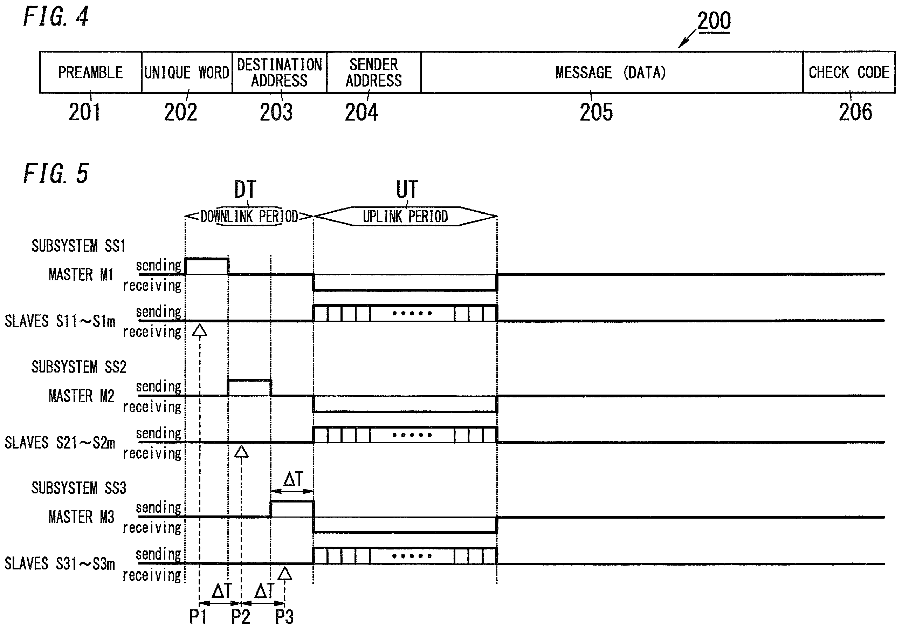

**FIG. 4** shows a frame format **200** of a wireless signal transmitted and received in the subsystem **SSi** in the present embodiment. A single frame thereof includes a synchronization bit (preamble) **201,** a frame synchronization pattern (unique word) **202,** a destination address **203,** a sender address **204,** a message (data) **205,** and a check code (e.g., a CRC code) **206.** When an identifier is designated as the destination address **203,** only a wireless device (the master **Mi** or the slave **Sij**) to which this identifier is allocated receives a wireless signal and obtains a message therefrom. In contrast, when a specific bit sequence (e.g., a bit sequence with all bits of 1) which is not allocated to any terminal is designated as the destination address **203,** this wireless signal is broadcast (multicast), and all the terminals obtain a message included therein. For example, a wireless signal including a periodical monitoring message or an inspection start message mentioned below is broadcast from the master **Mi** to all the slaves **Sij.** Note that, a signal of the wired communication between the master **Mi** of the subsystem **SSi** and the monitoring device **X** and between the masters **Mi** of the subsystems **SSi** has the same frame format **200** shown in **FIG. 4****.**

Besides, as mentioned above, to prolong a lifetime of a battery of the battery power supply **24** as possible, each slave **Sij** performs intermittent reception. For example, the slave controller **20** repeats a count of a predetermined intermittent reception period (rest period) by use of a timer incorporated in its microcomputer. Each time the count of the intermittent reception period is completed, the slave controller **20** activates the wireless communicator **22** to check whether it is possible to receive a desired wave (e.g., a wireless signal sent from the master **Mi**). When not detecting the wireless signal, the slave controller **20** immediately deactivates the wireless communicator **22** and sets it in a waiting state. Therefore, average power consumption can be greatly reduced. Note that, check of whether a wireless signal can be received is performed by the slave controller 20 based on a receiving signal strength indication signal (RSSI signal) defined as a DC voltage signal proportional to intensity of a received signal. For example, the slave controller **20** activates the wireless communicator **22** each time the rest period elapses. When activated, the wireless communicator **22** sends the receiving signal strength indication signal to the slave controller **20.** The slave controller **20** judges whether the first wireless signal is present, based on the receiving signal strength indicated by the receiving signal strength indication signal. For example, when the receiving signal strength is equal to a predetermined threshold (threshold for carrier detection) or more, the slave controller **20** concludes that the first wireless signal is present. When concluding that the first wireless signal is present, the slave controller **20** controls the wireless communicator **22** to start reception of the first wireless signal. According to this process, the slave **Sij** receives the first wireless signal. When the receiving signal strength is not greater than the predetermined threshold (threshold for carrier detection) until the predetermined waiting period elapses after the wireless communicator **22** is activated, the slave controller **20** concludes that no first wireless signal is present, and deactivates the wireless communicator **22.** Thereafter, the slave controller **20** starts the count of the rest period again.

Meanwhile, the master controller **10** of the master **Mi** broadcasts (multicasts) a wireless signal (a first wireless signal; a monitoring signal) including the periodic monitoring message periodically (e.g., at intervals of several hours or several tens of hours) via the wireless communicator **12.** In brief, the master **Mi** is configured to send the first wireless signal each time the predetermined waiting period elapses. In the present embodiment, the master **Mi** sends the wireless signal repeatedly in a period (master sending period) **Ti.**

With regard to each slave **Sij,** the slave controller **20** monitors at a preset interval (e.g., one hour) whether or not the sensor **23** fails and whether or not the battery of the battery power supply **24** runs out, and stores a monitoring result in a memory (not shown), for example. When receiving the periodic monitoring message (first wireless signal) from the master **Mi,** the slave controller **20** sends a wireless signal (a second wireless signal; a notification signal) including a notification message for announcing the monitoring result stored in the memory, to the master **Mi.** The master controller 10 of the master **Mi** sets the wireless communicator **12** in a receiving state to wait wireless signals (second wireless signals) sent from the respective slaves **Sij,** until a predetermined period elapses after the master controller **10** sends the wireless signal (first wireless signal) including the periodical monitoring message. When there is a slave **Sij** which the master **Mi** fails to receive the wireless signal (second wireless signal) including the notification message from before a lapse of the predetermined period, or when there is a slave **Sij** which provides the notification message including the monitoring result indicative of the occurrence of the abnormality, the master controller 10 produces a buzzer sound or the like to announce occurrence of abnormality and notifies the monitoring device **X** of the occurrence of the abnormality through a signal sent from the wired communicator **14.** It is presumed that the cause that the master **Mi** fails to receive the wireless signal (second wireless signal) including the notification message before a lapse of the predetermined period is a deterioration in a communication environment between the slave **Sij** and the master **Mi** (e.g., existence of an obstacle and occurrence of noises) in addition to a malfunction or running out of the slave **Sij**

The following explanation is made to a basic operation (operation executed when a fire occurs) of the fire alarm system of the present embodiment. For example, it is assumed that a fire occurs in a residence in which the subsystem **SS3** is installed and that the slave **S33** of the subsystem **SS3** detects a fire. With regard to the slave **S33** (hereinafter referred to as "fire origin slave **S33**") which has detected a fire, the slave controller **20** produces a warning sound via its speaker and sends the wireless signal including a message (alarming message) for announcing fire occurrence via the wireless communicator **22.** When the master **M3** receives the wireless signal sent from the fire origin slave **S33,** the master controller **10** of this master **M3** produces a warning sound via its speaker and sends the wireless signal including the alarming message via the wireless communicator **12** and additionally sends a signal including the alarming message via the wired communicator **14.** With regard to each of the slaves **S31** and **S32** which are not located in a fire origin, the slave controller **20** produces a warning sound via its speaker in response to reception of the wireless signal (wireless signal including the alarming message) sent from the fire origin slave **S33** or the master **M3.** Consequently, in the residence (residence at the fire origin) at which a fire occurs, all the fire alarming devices (the master **M3** and the slaves **S31** to **S33**) belonging to the subsystem **SS3** can cooperate to produce warning sounds.

Meanwhile, when receiving the signal sent from the master **M3** in the residence at the fire origin, the monitoring device **X** sends the signal including the alarming message via the signal line **Ls** to the masters **M1** and **M2** of the respective subsystems **SS1** and **SS2** which are installed in residences different from the residence at the fire origin. Note that, the monitoring device **X** may announce fire occurrence to a fire station (in the case of the security system, a control center of a company providing a security service) via a network such as an Internet, a public telephone network, and a mobile telephone network. With regard to each of the masters **M1** and **M2,** when the wired communicator **14** receives the signal sent from the monitoring device **X,** the master controller **10** produces a warning sound via its speaker and sends the wireless signal including the alarming message. Thus, all the slaves **S11** to **S13** and **S21** to **S23** belonging to the subsystems **SS1** and **SS2** receive the wireless signals sent from the masters **M1** and **M2** respectively, and the slave controllers **20** produce warning sounds via their own speakers. Consequently, with regard to all the residences including the residences not located at the fire origin, all the fire alarming devices (the masters **M1** and **M2** and the slaves **S11** to **S13** and **S21** to **S23**) can cooperate to produce warning sounds.

As for a residential fire alarm system, there is no obligation by law to check the system periodically. However, in view of safety, it is recommended that such inspection is conducted a few times a month. In consideration of this recommendation, each subsystem **SSi** is configured to conduct inspection (operating test) automatically in response to instructions from the monitoring device **X.**

For example, when a controller performs a predetermined operation on the monitoring device **X,** the monitoring device **X** broadcasts the signal (inspection signal) including the message (inspection start message) for announcing start of inspection to the respective masters **Mi** via the signal line **Ls.** In brief, the monitoring device **X** is configured to send the inspection signal to the plurality of masters **Mi** in response to manipulation by a user.

With regard to the master **Mi** of each subsystem **SSi,** when receives the inspection start message from the above signal (inspection signal) via the wired communicator **14,** the master controller **10** starts the inspection (operating test). Note that, in this inspection (operating test), the basically same processes as those in the periodical monitoring conducted for each subsystem **SSi** are conducted. Concretely, the master controller **10** of the master **Mi** broadcasts the wireless signal (first wireless signal) including the inspection start message via the wireless communicator **12.**

The slave controller **20** of each slave **Sij** sends the wireless signal (second wireless signal) including the notification message for announcing the monitoring result stored in the memory, to the master **Mi**, in a similar manner as the process conducted by the slave controller **20** in response to reception of the periodical monitoring message.

The master controller **10** of the master **Mi** sets the wireless communicator **12** in the receiving state to wait the wireless signals sent from the respective slaves **Sij,** until a predetermined period elapses after the master controller **10** sends the wireless signal including the inspection start message (periodical monitoring message). When there is a slave **Sij** which the master **Mi** fails to receive the notification message from before a lapse of the predetermined period, or when there is a slave **Sij** which provides the notification message including the monitoring result indicative of the occurrence of the abnormality, the master controller **10** produces a buzzer sound or the like to announce occurrence of abnormality and notifies the monitoring device **X** of the occurrence of the abnormality through a signal sent from the wired communicator **14.**

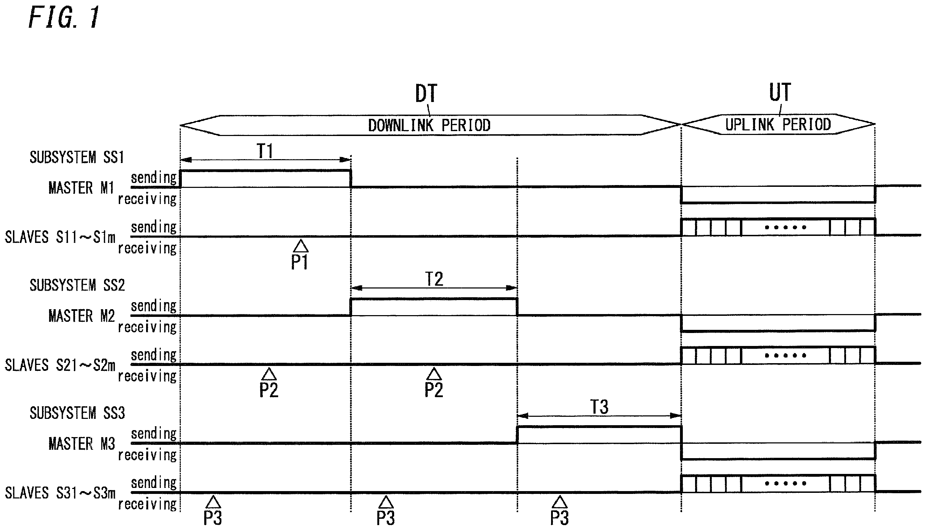

For example, when each master **Mi** sends the wireless signal (first wireless signal) including the inspection start message (periodical monitoring message) simultaneously (at the same time), there is a possibility that interference between the wireless signals of the subsystems **SSi** installed in adjacent residences occurs and the slaves **Sij** in such subsystems **SSi** fail to receive the wireless signal properly. In view of this problem, according to the present embodiment, as shown in **FIG. 1****,** the masters **Mi** send the wireless signal (wireless signal including the inspection start message) in the predetermined order, and each of the slaves **Sij** returns (sends) the wireless signal including the notification message in the sending period (uplink period in **FIG. 1**) **UT** which comes after all the masters **Mi** complete sending the wireless signal.

As mentioned above, the wireless communication system of the present embodiment includes a plurality of subsystems **SSi** each including the master **Mi** and one or more slaves **Sij** configured to perform wireless communication with this master **Mi.** The masters **Mi** of the respective subsystems **SSi** perform wired communication with each other. The plurality of masters **Mi** send the wireless signal (first wireless signal) in a predetermined order. When the slave **Sij** receives the wireless signal (first wireless signal) sent from the master **Mi** belonging to the subsystem **SSi** including this slave **Sij,** the slave **Sij** sends the wireless signal (second wireless signal) as a reply to this master **Mi** in the sending period (uplink period) **UT** which comes after the plurality of masters **Mi** complete sending the wireless signal (first wireless signal).

In other words, the wireless communication system of the present embodiment includes the plurality of subsystems **SSi.** Each of the plurality of subsystems **SSi** includes a single master **Mi** and a slave **Sij** configured to perform wireless communication with the master **Mi.** The master **Mi** is configured to send the first wireless signal in the first period (downlink period) **DT** common to the plurality of subsystems **SSi.** The master **Mi** is configured to wait the second wireless signal in the second period (uplink period) **UT** which is subsequent to the first period and is common to the plurality of subsystems **SSi.** The slave **Sij** is configured to, when receiving the first wireless signal, send the second wireless signal in the second period **UT.** The master **Mi** is configured to send the first wireless signal in a period which is included in the first period but is different from that for the master **Mj** of another subsystem **SSj.**

In the present embodiment, as shown in **FIG. 1****,** the plurality of masters **Mi** send the wireless signal (first wireless signal) including the periodically monitoring message or the inspection start message in turn during the downlink period **DT.** Thereafter, the plurality of masters **Mi** wait for receiving the second wireless signal from the slave **Sij** during the uplink period **UT** subsequent to the downlink period **DT.**

In the instance shown in **FIG. 1****,** the master **M1** of the subsystem **SS1** sends the first wireless signal in a period **T1** which is different from a period **T2** allocated to the master **M2** of the different subsystem **SS2** and a period **T3** allocated to the master **M3** of the different subsystem **SS3.** Similarly, the master **M2** sends the first wireless signal in the period **T2** different from the periods **T1** and **T3.** The master **M3** sends the first wireless signal in the period **T3** different from the periods **T1** and **T2.** In other words, the plurality of masters **M1, M2,** and **M3** send the first wireless signal in sequence. In this instance, the downlink period **DT** is divided into the three periods **T1, T2,** and **T3.** These three periods **T1, T2,** and **T3** are respectively allocated to the three masters **Mi.**

In the present embodiment, the order of the plurality of masters **Mi** which send the first wireless signal is preliminarily determined. In brief, the plurality of masters **Mi** are configured to send the first wireless signal in the predetermined order. For example, the plurality of masters **M1, M2,** and **M3** send the first wireless signal in this order. In this case, when receiving the inspection signal from the monitoring device **X** via the communication line **Ls,** the first master **M1** sends the wireless signal (first wireless signal) including the inspection start message. Alternatively, when the predetermined waiting period elapses, the first master **M1** sends the wireless signal (first wireless signal) including the periodically monitoring message. After completing sending the first wireless signal, the master **M1** sends a start signal to the next master **M2** via the communication line **Ls.** When receiving the start signal, the master **M2** starts to send the first wireless signal, and sends the start signal to the next (last) master **M3** via the communication line **Ls** after completing sending the first wireless signal. When receiving the start signal, the last master **M3** starts to send the first wireless signal. In this instance, each master **Mi** preliminarily stores the order of the masters sending the wireless signal.

Note that, the monitoring device **X** may be configured to send the inspection signal to the plurality of masters **Mi** in sequence. In this case, each master **Mi** is configured to send the first wireless signal in response to the inspection signal. Alternatively, a timing of sending the first wireless signal for each master **Mi** may be determined such that the plurality of masters **Mi** send the first wireless signals in turn in the downlink period **DT.**

With employing this configuration, since the plurality of masters **Mi** do not send the wireless signals (first wireless signals) at the same time, it is possible to suppress interference between the wireless signals of the subsystems **SSi** in the adjacent residences.

Besides, in the present embodiment, the periods (master sending periods) **T1, T2,** and **T3** in which the masters **Mi** send the wireless signals (first wireless signals) including the inspection start messages (periodically monitoring messages) respectively are fixed. Further, the slave controller **20** of the slave **S1j** in the subsystem **SS1** starts to send (return) the wireless signal after a period (= **T2**+**T3**) equal to the sum of the master sending periods **T2** and **T3** of the respective other subsystems **SS2** and **SS3** elapses from the end of the wireless signal sent from the master **M1.** Similarly, the slave controller **20** of the slave **S2j** in the subsystem **SS2** starts to send (return) the wireless signal after the master sending period **T3** of the other subsystem **SS3** elapses from the end of the wireless signal sent from the master **M2.** However, the slave controller **20** of the slave **S3j** in the subsystem **SS3** starts to send (return) the wireless signal after the end of the wireless signal sent from the master **M3.**

Accordingly, each slave **Sij** can send the wireless signal (second wireless signal) including the notification message in the sending period (uplink period) **UT** which comes after all the masters **Mi** complete sending the wireless signal (first wireless signal).

For the purpose of disaster prevention deeply involved in human lives, to shorten total response time of all the subsystems **SSi,** response returning periods for the slaves **Sij** of the respective subsystems **SSi** appear in parallel. However, in the master sending period **Ti** (**i = 1, 2, 3**) triggering those periods, to enable each slave **Sij** to successfully receive the wireless signal, the wireless signals are sent in a time-divisional manner not to coincide with each other.

Meanwhile, even when the slave **Sij** of each subsystem **SSi** sends the wireless signal (second wireless signal) to the corresponding master **Mi** within the sending period (uplink period) **UT,** interference between the wireless signals of the subsystems SSi in the adjacent residences may occur.

In view of this insufficiency, according to the present embodiment, to prevent such interference, the slaves **Sij** respectively send the wireless signals via the frequency channels which are respectively allocated to the subsystems **SSi** and different from each other. For example, in the present embodiment, the frequency channels of 426.2625 MHz, 426.2875 MHz, and 426.3125 MHz are allocated to the subsystems **SS1, SS2,** and **SS3,** respectively.

In brief, the slaves **Sij** are configured to send the wireless signals (second wireless signals) via the frequency channels allocated to the subsystems **SSi,** respectively. In other words, different frequency channels are respectively allocated to the plurality of subsystems **SSi.** The slave **Sij** is configured to send the second wireless signal via the frequency channel allocated to the subsystem **SSi** including this slave **Sij.**

Further, in the present embodiment, the masters **Mi** respectively send the wireless signals via the frequency channels which are respectively allocated to the subsystems **SSi** and different from each other. Hence, there is no need for the wireless communicator **12** to change the frequency channel when sending and receiving are switched. In brief, the masters **Mi** are configured to send the wireless signals (first wireless signals) via the frequency channels allocated to the subsystems **SSi,** respectively. In other words, the master **Mi** is configured to send the first wireless signal via the frequency channel allocated to the subsystem **SSi** including this master **Mi.**

Further, in the present embodiment, as shown in **FIG. 1****,** the slave **Sij** of each subsystem **SSi** sends (returns) the wireless signal (wireless signal including the notification message) to the master **Mi** using time-division multiplexing. Thus, interference between the wireless signals sent from the slaves **Sij** can be avoided as possible.

Particularly, the sending period (uplink period) UT is divided into a plurality of time slots (hereinafter, referred to as "slots") while the number of slots is selected not less than the number of slaves **Sij.** With regard to each subsystem **SSi,** the master **Mi** allocates the slots to the slaves **Sij** one by one such that the same slot is not allocated to the different slaves **Sij.** In other words, the master **Mi** is configured to prepare the plurality of time slots in the second period (uplink period) **UT.** The master **Mi** is configured to respectively allocate the time slots to the slaves **Sij** included in the subsystem **SSi** to which the master **Mi** belongs. Especially in the present embodiment, each of the plurality of subsystems **SSi** has the same number of time slots, and the time slots of the different subsystems **SSi** are synchronized with each other. Further, the common (same) slot number is given to the time slots synchronized with each other.

For example, the plurality of slots are given slot numbers of 1, 2, ... to in order from the first. In this case, allocated to each slave **Sij** is a slot number identical to a slave number "**j**" of an identifier given thereto. Accordingly, when the sending period (uplink period) **UT** associated with the slave **Sij** starts, in order from the slave **Sil** having the slave number of **1,** the slave controller **20** sends the wireless signal (second wireless signal) by use of the slot having the slot number allocated thereto. Consequently, it is possible to prevent interference between the wireless signals (second wireless signals) from the slaves **Sij** belonging to the same subsystem **SSi** (see **FIG. 1**). However, a method of replying from the slave **Sij** to the master **Mi** is not limited to the time-division multiplexing, but may be another method such as carrier sense multiple access.

In each subsystem **SSi,** since the intermittent reception periods (rest periods) counted by the slave controllers **20** are not synchronized with each other, the timings at which the slaves **Sij** perform the intermittent reception may not coincide with each other. In consideration of this, to enable all the slaves **Sij** to receive successfully the wireless signals (first wireless signals), the master sending period **Ti** of the master controller **10** is selected to be longer than the intermittent reception period. However, this causes an increase in the master sending period **Ti** necessary for all the masters **Mi** to send the wireless signal (first wireless signal).

In view of the above, while a fire is not detected (for example, at the time of starting the operation of the system, and within one or more hours from the start of the operation), the slave controllers **20** of the respective slaves **Sij** adjust the timings of starting the count of the intermittent reception periods (rest periods) based on the timing of receiving the wireless signal (e.g., the wireless signal including the periodically monitoring message) broadcast periodically by the master **Mi.** For example, when the wireless communicator **22** of the slave **Sij** receives the wireless signal including the periodically monitoring message, the slave controller **20** terminates the count of the intermittent reception period by the timer and restarts the count of the intermittent reception period by the timer after a lapse of a predetermined waiting period from the end of the wireless signal. Hence, after the wireless signals including the periodically monitoring messages are received, the timings at which the respective slave controllers **20** complete the count of the intermittent reception period coincide with each other. In brief, all the slaves **Sij** belonging to the same subsystem **SSi** can have the intermittent reception periods synchronized with each other. So long as the intermittent reception periods of all the slaves **Sij** included in the same subsystem **SSi** are synchronized with each other, the master controller **10** can send the wireless signal (first wireless signal) in synchronization with the timing of the intermittent reception by the slave **Sij** (i.e., the timing at which the slave **Sij** performs detection of the first wireless signal). Hence, it is possible to shorten the period (master sending period **Ti**) in which the master **Mi** sends the wireless signals (first wireless signal).

As mentioned above, the slave **Sij** is configured to, each time the predetermined rest period elapses, judge whether the first wireless signal exists. The slave **Sij** is configured to, when concluding that the first wireless signal exists, start to receive the first wireless signal. The slave **Sij** is configured to, based on a timing at which the slave **Sij** receives the first wireless signal, adjust a start timing (timing at which the slave **Sij** starts the rest period) such that the start timing coincides with the start timing of another slave **Sij** belonging to the same subsystem **SSi** including the former slave **Sij.**

However, to enable the plurality of masters **Mi** to send the wireless signals in a time-divisional manner, the timing of starting the intermittent reception period (rest period) of the subsystem **SSi** needs to be adjusted not to coincide with the timing of starting the intermittent reception period (rest period) of the different subsystem **SSi.** In this regard, to vary the timing of performing the periodic monitoring (timing of sending the wireless signal including the periodically monitoring message) by a predetermined delay period **ΔT** from that of the other, the masters **Mi** perform wired communication with each other via the communication line **Ls.** Note that, it is sufficient that the delay period **ΔT** is not shorter than the master sending period **Ti** for each subsystem **SSi** (i.e., **ΔT** ≥ **Ti**) (see **FIG. 5**). In summary, the master **Mi** is configured to communicate with a master **Mi** included in a different subsystem **SSi** via the communication line **Ls.** The master **Mi** is configured to determine the period (master sending period) **Ti** for sending the first wireless signal within the first period **DT,** based on information obtained from the different subsystem **SSi** via the communication line Ls. In this regard, for example, the aforementioned information shows the identifier of the master **Mi** which should send the first wireless signal next. For instance, when completing sending the first wireless signal, the master **Mi** sends the identifier indicative of the master **Mi** which should send the first wireless signal next, to the other masters **Mi** via the communication line **Ls.** When receiving the identifier via the communication line **Ls,** the master **Mi** checks whether the identifier received is same as that allocated to the master **Mi.** When concluding that the identifier received is same as that allocated to the master **Mi**, the master **Mi** starts to send the first wireless signal. When concluding that the identifier received is not same as that allocated to the master **Mi**, the master **Mi** waits the next identifier.

Alternatively, in this wireless communication system, it is preferable that the slave **Sij** of the subsystem **SSi** perform the intermittent reception and adjust the timing of starting the rest period to not coincide with the timing of starting the rest period in the different subsystem **SSi** based on the timing of receiving the wireless signal periodically broadcast by the master **Mi** of the subsystem **SSi.** In the intermittent reception, the slave **Sij** checks whether an electric wave representing the wireless signal is present. When detecting this electric wave, the slave **Sij** continues receiving the wireless signal. When not detecting this electric wave, the slave **Sij** terminates receiving the wireless signal and starts to rest.

In the case where the subsystems **SSi** are synchronized with each other while the intermittent reception timing is delayed by **ΔT** from the other (see **FIG. 5**) as mentioned above, it is preferable that any one of the masters **Mi** send the wireless signal first based on a timing at which the masters **Mi** are instructed to send the wireless signal (timing of receiving the inspection start message from the monitoring device **X**).

In brief, preferably, the total of the master sending periods **Ti** (i.e., the downlink period **DT**) is fixed. The total of the master sending periods **Ti** (i.e., the downlink period **DT**) is a period which starts from the time when the first master **Mi** starts to send the wireless signal (first wireless signal) and ends on the time when the last master **Mi** completes sending the wireless signal (first wireless signal). The master **Mi** appropriately selected from the plurality of masters **Mi** sends the wireless signal (first wireless signal) first in accordance with the timing when the plurality of masters **Mi** are instructed to send the wireless signal (first wireless signal).

In brief, the master **Mi** is configured to, when receiving instructions to send the first wireless signal, send the first wireless signal in response to reception of the instructions.

In the instance shown in **FIG. 5,** the master **Mi** stores the intermittent reception timings (**P1, P2,** and **P3**) of the subsystem **SSi** including this master **Mi.** When receiving the inspection start message from the monitoring device **X,** the master **Mi** sends the time of the next intermittent reception timing to the other master **Mi** via the communication line **Ls.** The master **Mi** compares the time of the next intermittent reception timing related thereto with the time of the next intermittent reception timing related to the other master **Mi.** When the master **Mi** concludes that the time of the next intermittent reception timing related thereto is the earliest, the master **Mi** starts to send the first wireless signal at the same timing as that of the next intermittent reception. In this instance, the order of the masters **Mi** with regard to sending the first wireless signal is determined based on which master **Mi** sends the first wireless signal first. For example, when the master **M1** sends the first wireless signal first, the order indicates the masters **M1, M2,** and **M3.** When the master **M2** sends the first wireless signal first, the order indicates the masters **M2, M3,** and **M1.** When the master **M3** sends the first wireless signal first, the order indicates the masters **M3, M1,** and **M2.** The following explanation is made to this operation.

For example, each of the masters **Mi** receives the inspection start message from the monitoring device **X** after the intermittent reception timing of the subsystem **SS1** (see the top symbol "**Δ**" in **FIG.5**) and before the intermittent reception timing of the subsystem **SS2** (see the second symbol "**Δ**" from the top in **FIG.5**). In this case, the master **Mi** related to the intermittent reception timing which comes first after the reception of the inspection start message, that is, the master **M2** of the subsystem **SS2** starts to send the wireless signal (wireless signal including the inspection start message) first. After the completion of the master sending period **T2** of the master **M2,** the master **Mi** related to the intermittent reception timing which comes second, that is, the master **M3** of the subsystem **SS3** starts to send the wireless signal. Further, after the completion of the master sending period **T3** of the master **M3,** the master **Mi** related to the intermittent reception timing which comes last, that is, the master **M1** of the subsystem **SS1** starts to send the wireless signal. Besides, the master controller **10** of the master **M2** which starts to send the wireless signal first controls the wired communicator **14** to send to other masters **M1** and **M3** a signal including a message informing the master **M2** starts to send the wireless signal first. Therefore, since the master **M2** is selected as one which sends the wireless signal first, each of the master controllers **10** of the masters **M1** and **M3** can determine its own order relating to sending the wireless signal. Additionally, the master controller **10** of each master **Mi** controls the wireless communicator **12** to send to the corresponding slaves **Sij** the wireless signal including the inspection start message as well as the order relating to sending. Accordingly, the slave controller **20** of each slave **Sij** can determine the timing of starting the sending period (uplink period) for sending the wireless signal to the master **Mi** with reference to the order relating to sending provided from the master **Mi.**

Note that, the master **Mi** may determine the order of sending the first wireless signal by comparing the time of the next intermittent reception timing related thereto with the time of the next intermittent reception timing related to the other master **Mi.** For example, the master **Mi** may be configured to determine the order of the time of the next intermittent reception timing related thereto, and send the first wireless signal in conformity with the determined order.

As mentioned above, the master **Mi** selected appropriately from the plurality of masters **Mi** sends the wireless signal first in accordance with the timing at which the plurality of masters **Mi** are instructed to send the wireless signal. Accordingly, it is possible to keep the actual total of the master sending periods shorter than the theoretical total (= **T1**+**T2**+**T3**) of the master sending periods **T1, T2,** and **T3** of the respective masters **Mi.**

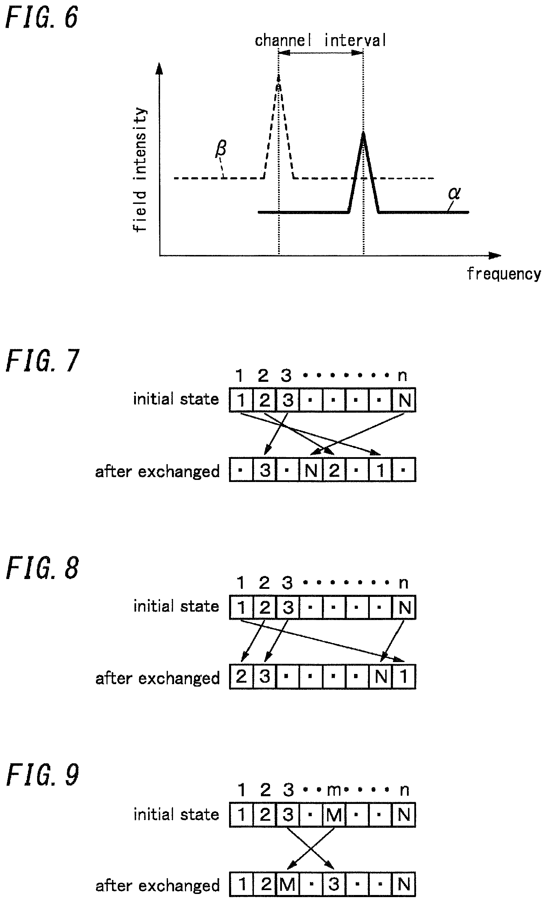

When the sending periods in which the slaves **Sij** of the respective subsystem **SSi** send (return) the wireless signals are overlapped with each other, interference between the wireless signals of the respective subsystems **SSi** is likely to occur even when the frequency channels are different from each other. For example, it is assumed that a distance between the master **M1** and the slave **S21** of the different subsystem **SS2** is considerably shorter than a distance between the master **M1** and the slave **S11** of the same subsystem **SS1.** **FIG. 6** shows field intensities of the wireless signals received by the wireless communicator **12** of the master **M1,** and a solid line **a** represents the filed intensity of the wireless signal sent from the slave **S11** belonging to the same subsystem **SS1,** and a broken line **β** represents the field intensity of the wireless signal sent from the slave **S21** belonging to the other subsystem **SS2.** Since a channel interval between the frequency channels of these two kinds of the wireless signals is relatively small, a difference between the field intensity (electrical power) regarding the frequency channel of the subsystem **SS1** and adjacent channel leakage power regarding the frequency channel of the subsystem **SS2** is relatively small. As a result, the wireless communicator **12** of the master **M1** is likely to suffer from interference between the wireless signal of the slave **S11** and the wireless signal sent from the slave **S21** of the adjacent subsystem **SS2,** and fail to receive the wireless signal of the slave **S11** which the wireless communicator **12** should receive normally.

In such a case, the master controller **10** of the master **M1** sends the wireless signal again to the slave **S11** which fails to receive the wireless signal. At this time, the master **M2** in the different subsystem **SS2** sends no wireless signal, and the slave **S21** returns no wireless signal. Consequently, the wireless signal returned by the slave **S11** can be successfully received by the wireless communicator **12** of the master **M1.** In this manner, with resending the wireless signal, the master **M1** can receive the wireless signal from the slave **S11** which fails to receive the wireless signal which is sent first. However, also in the next inspection or later, there is a high probability that interference between the wireless signals occur.

In this regard, the aforementioned interference between the wireless signals occurs only when the slots (slot numbers) allocated to the two slaves **S11** and **S21** are overlapped with each other. Therefore, according to a configuration where the slot allocated to the slave **S11** of the subsystem **S11** is changed such that the slots of the two slaves **S11** and **S21** are not overlapped with each other when the aforementioned interference between the wireless signals occurs, it is presumed that the interference between the wireless signals can be avoided at a high probability in the next inspection or later. In other words, when the field intensity of the wireless signal, which should be received normally, sent from the slave **S1j** is increased, effects caused by such interference can be reduced and the intended wireless signal can be successfully received even when there is no change in the field intensity of the interfering wireless signal (wireless signal sent from the slave **S21**).

In summary, with regard to each subsystem **SSi,** each of the plurality of slaves **Sij** belonging to this subsystem **SSi** sends the wireless signal (second wireless signal) via the time slot allocated to this slave **Sij** by a master **Mi**, out of the plurality of time slots into which the sending period (uplink period) **UT** is divided, and when there is a slave **Sij** which sends the wireless signal (second wireless signal) which the master **Mi** belonging to this subsystem **SSij** fails to receive, the master **Mi** changes the slot allocated to this slave **Sij.**

In other words, each of the subsystems **SSi** includes the plurality of slaves **Sij.** The master **Mi** is configured to prepare the plurality of time slots in the second period (uplink period) **UT.** The master **Mi** is configured to allocate the time slot to the slave **Sij** included in the subsystem **SSi** to which the master **Mi** belongs. The slave **Sij** is configured to send the second wireless signal to the master **Mi** included in the subsystem **SSi** to which the slave **Sij** belongs, by use of the allocated time slot. The master **Mi** is configured to judge whether a no-reply slave exists with regard to the slaves **Sij** included in the subsystem **SSi** to which the master **Mi** belongs. The no-reply slave is defined by the slave **Sij** that sends the second wireless signal which the master **Mi** fails to receive. The master **Mi** is configured to, when concluding that the no-reply slave exists, change the time slot for the no-reply slave to an alternative time slot.

The following explanation is made to a process in which the master controller **10** of the master **M1** changes the slot allocated to the slave **S1j**. For example, as shown in **FIG. 7****,** in the initial state, the slots are allocated such that the slot numbers of **1** to n are respectively corresponding to the slave numbers of 1 to N. The master controller **10** generates a random number and randomly reallocates the slot numbers to the slave numbers.

In summary, in this wireless communication system, it is preferable that the master **Mi** randomly change the time slot allocated to the slave **Sij.** In other words, the master **Mi** is configured to randomly select the alternative slot from the plurality of time slots.

Alternatively, as shown in **FIG. 8****,** the master **Mi** may shift the slot numbers one by one such that the slot numbers of 2 to N and **1** are respectively allocated to the slave numbers of 1 to N (the master **Mi** may select the slot adjacent to the initial slot as a new slot).

In summary, it is preferable that the master **Mi** change the time slot allocated to the slave **Sij** to a different time slot adjacent thereto. In other words, the master **Mi** is configured to select, as the alternative time slot, the time slot adjacent to the time slot allocated to the no-reply slave.

Alternatively, as shown in **FIG. 9****,** the slots may be exchanged between the slave S13 which fails to receive the wireless signal and the slave **S1m** which successfully receives the wireless signal.

In brief, in this wireless communication system, it is preferable that the master **Mi** exchange the time slot for the slave **Sij** and the time slot for the slave **Sij** that sends the wireless signal which the master **Mi** successfully receives. In other words, the master **Mi** is configured to, when concluding that the no-reply slave exists, exchange the time slot for the no-reply slave and the time slot allocated to the slave Sij that sends the second wireless signal which the master **Mi** successfully receives.

In this case, it is preferable that the slot be exchanged for the slot allocated to the slave **S1j** corresponding to the highest value of the RSSI signal of the received wireless signal out of the slaves **S1j** which successfully receive the wireless signals.

In brief, in this wireless communication system, it is preferable that the master **Mi** exchange the time slot for the slave **Sij** and the time slot for the slave **Sij** corresponding to the highest reception level of the wireless signal out of the slaves **Sij** that send the wireless signals which the master **Mi** successfully receives. In other words, the master **Mi** is configured to, when concluding that the no-reply slave exists, exchange the time slot for the no-reply slave and the time slot allocated to the slave **Sij** associated with the second wireless signal having the highest reception level.

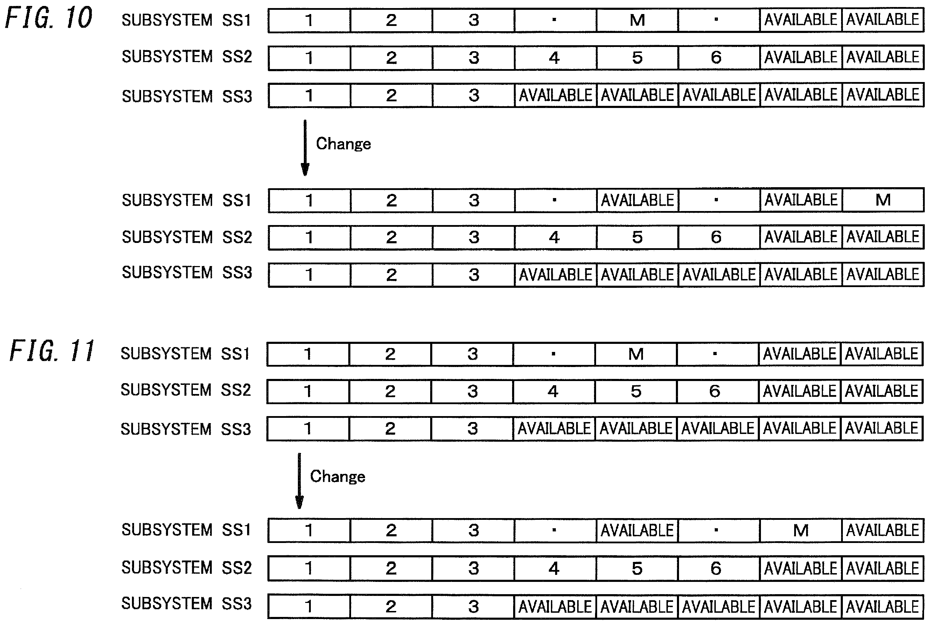

Further, in a particular case, the number of slaves **Sij** in the subsystem **SSi** is less than the number of slots, and the sequential slots are respectively allocated to the slaves **Sij** in order from the first slot (see **FIG. 10** and **FIG. 11**).

In such a case, for example, when failing to receive the wireless signal from the slave **S1M** having the slave number of M in the subsystem **SS1,** the master controller **10** of the master **M1** may change the slot for the slave **S1M** to an available slot which is not allocated to any slave **Sij** (see **FIG. 10**).

In brief, in this wireless communication system, it is preferable that the number of slaves **Sij** in the subsystem **SSi** be less than the number of slots, and that the sequential slots be respectively allocated to the slaves **Sij** in order from the first slot, and that the master **Mi** change the slot for the slave **Sij** to the available slot which is not allocated to any slave **Sij.** In other words, the plurality of time slots include a spare time slot (available slot) which is not allocated to any slave **Sij.** The master **Mi** is configured to select the spare time slot as the alternative time slot.

Further, in a case where there are some available slots, as shown in **FIG. 11****,** it is preferable that an available slot which is not overlapped with the slots respectively allocated to the slaves **S2j** and **S3j** of the different subsystems **SS2** and **SS3** be selected.

In brief, in this wireless communication system, it is preferable that the number of slaves **Sij** in the subsystem **SSi** be less than the number of slots, and that the sequential slots be respectively allocated to the slaves **Sij** in order from the first slot, and that the master **Mi** change the time slot for the slave **Sij** to the available slot which is not overlapped with the slots respectively allocated to the slaves **Sij** of the different subsystems. In other words, the master **Mi** is configured to judge whether non-electric-wave period is present in the second period (uplink period) **UT,** the non-electric-wave period being defined as a period in which any slave **Sij** in other subsystems **SSi** sends no second wireless signal. The master **Mi** is configured to, when concluding that the non-electric-wave period is present in the second period **UT,** select the time slot corresponding to the non-electric-wave period as the alternative time slot. For example, the master **Mi** notifies the other masters **Mi** of the numbers of the time slots allocated to the slaves **Sij** via the communication line **Ls.** The master **Mi** determines that the time slot not allocated to any slave **Sij** is the time slot corresponding to the non-electric-wave.

Meanwhile, for a case where there is no available slot mentioned above, each master **Mi** measures the reception level (the value of the RSSI signal) of the wireless signal sent from the slave **Sij** of the different subsystem **SSi** in advance. It is preferable that a slot overlapped with a slot having a relatively low reception level be selected when changing the allocated slot is required.

In brief, in this wireless communication system, it is preferable that the master **Mi** measure the reception level of the wireless signal which the slave **Sij** of another subsystem sends via the time slot allocated to this slave **Sij.** Further, it is preferable that, when there is a slave **Sij** by which the master **Mi** fails to receive the wireless signal sent, the master **Mi** change the time slot for this slave **Sij** to the time slot overlapped with the time slot corresponding to the relatively low reception level. In other words, the master **Mi** is configured to measure the reception level of the second wireless signal from the slave **Sij** belonging to another subsystem **SSi** in the second period (uplink period) **UT.** The master **Mi** is configured to judge whether a low electrical wave period in which the measured reception level is not greater than a predetermined threshold is present in the second period (uplink period) **UT.** The master **Mi** is configured to, when concluding that the low electrical wave period is present in the second period (uplink period) **UT,** select the time slot corresponding to the low electrical wave period as the alternative time slot.

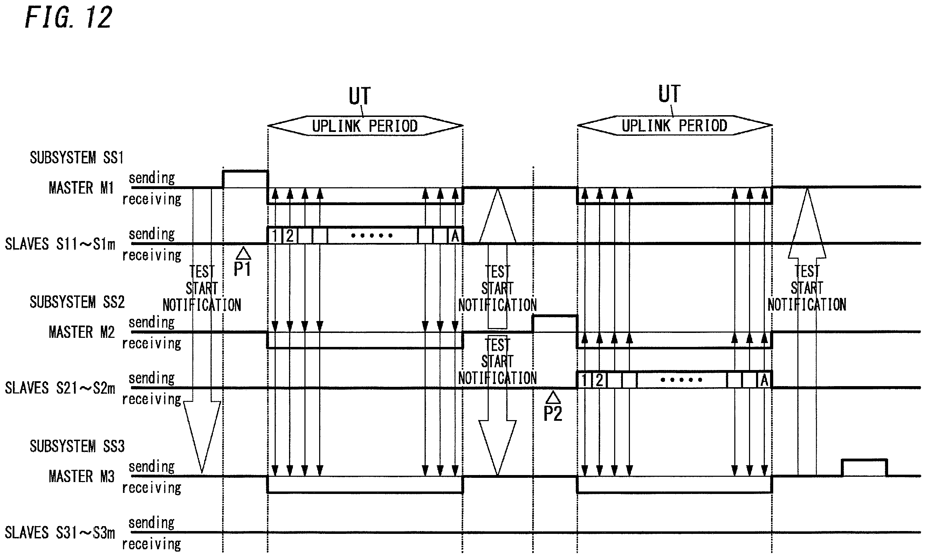

For example, when the system is activated after completion of installation thereof, as shown in **FIG. 12****,** the master **M1** of the subsystem **SS1** sends to other masters **Mi** a signal including a message for announcing start of a test to the other masters **M1** and **M2** via the signal lines **Ls,** and the test is started. First, the wireless communicator **12** of the master **M1** broadcasts the wireless signal, and the slave **S1j** which has received this wireless signal returns (sends) a wireless signal by using the time-division multiplexing. With regard to each of the different masters **M2** and **M3,** the wireless communicator **12** is set in the receiving state to measure the reception level for each slot in the subsystem **SS1,** and the master controller 10 stores the measurement values (values of the RSSI signals) respectively associated with the slot numbers in its memory.

Next, the wireless communicator **12** of the master **M2** broadcasts the wireless signal, and the slave **S2j** which has received this wireless signal returns (sends) a wireless signal by using the time-division multiplexing. With regard to each of the different masters **M1** and **M3,** a wireless communicator **12** is set in the receiving state to measure the reception level for each slot in the subsystem **SS2,** and a master controller **10** stores the measurement values (values of the RSSI signals) respectively associated with the slot numbers in its memory. Finally, the wireless communicator **12** of the master **M3** broadcasts the wireless signal, and the slave **S3j** which has received this wireless signal returns (sends) a wireless signal by using the time-division multiplexing. With regard to each of the different masters **M1** and **M2,** a wireless communicator **12** is set in the receiving state to measure the reception level for each slot in the subsystem **SS3,** and a master controller **10** stores the measurement values (values of the RSSI signals) respectively associated with the slot numbers in its memory. However, there is no need to store the measurement values of the reception level of all the slots in a memory. For example, only the slot number associated with the smallest measurement value or the slot number associated with the measurement value not less than the predetermined threshold may be stored in a memory.

When a degree of interference between the wireless signals for each slot, that is, the reception level of the wireless signal sent from the slave **Sij** of the different subsystem **SSi** is measured in advance, the master controller **10** can select the slot with the lowest reception level or the slot with the reception level not greater than the threshold, at the time of changing the allocated slots. Hence, the interference between the wireless signals can be avoided. Note that, when the measurement values of all the slots are stored in the memory of the master controller **10,** the slot can be selected in the order from the slot corresponding to the lowest measurement value of the reception level when the interference between the wireless signals occurs with regard to some of the plurality of slots.

The master sending periods **Ti** of the respective masters **Mi** may be fixed or variable, provided that the total (**T1**+**T2**+**T3**) thereof is kept constant. For example, when the subsystem **SSi** has a relatively low previous success rate of response from the slaves **Sij** (obtained by dividing the number of slaves **Sij** that respond by the total number of slaves **Sij**), the master **Mi** of this subsystem **SSi** prolongs the next master sending period **Ti** in accordance with the instructions from the monitoring device **X.** In this case, the success rate of response from the slave **Sij** can be improved. In this regard, the master sending period **Ti** is varied (prolonged or shortened) by means of increasing or decreasing the number of times of successively sending the wireless signal (frame) from the master **Mi.** Note that, the instructions from the monitoring device **X** are not always necessary for the master **Mi** of the subsystem **SSi** to vary the master sending period **Ti.** For example, the master controllers 10 of the respective masters **Mi** may perform the wired communication to notify each other of the timing of starting to send the wireless signal as well as the timing of terminating sending the wireless signal. Just when the master sending period **Ti** of the prior master **Mi** elapses, the next master **Mi+1** may start to send the wireless signal (the master sending period **Ti+1**). In this case, the total of the master sending periods **Ti** is extendable within the range of the sending period defined by Radio Act. With improving the success rate of response from the slave **Sij** as mentioned above, the master sending period **Ti** can be prolonged. Hence, it is possible to remedy a situation where the slave **Sij** fails to receive the wireless signal due to noises which may occur in the master sending period **Ti** when the master sending period **Ti** is short.

### (SECOND EMBODIMENT)

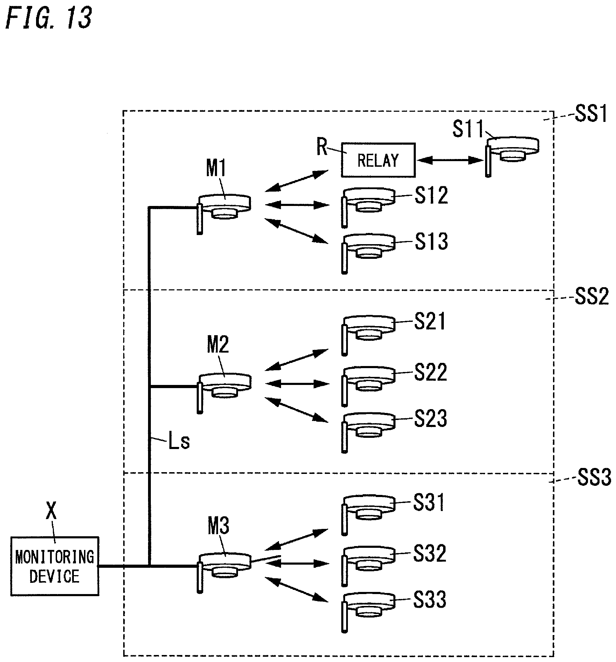

As shown in **FIG. 13****,** the present embodiment is characterized by being provided with a relay **R.** The relay **R** belongs to the subsystem **SSi,** and relays the wireless signal sent from the master **Mi** of this subsystem **SSi** to at least one of the slaves **Sij** of this subsystem **SSi.** In the illustrated instance, the relay **R** relays the wireless signal between the master **M1** and the slave **S11** of the subsystem **SS1.**

The relay **R** has the substantially same components as those of the master **Mi** with the exception that the relay **R** is devoid of the sensor and the wired communicator. The relay **R** receives electric power from the commercial AC power source **100.** Note that, an identifier for the relay **R** may be a combination of the system number and the slave number in a similar manner as the slave **Sij,** or a combination of the system number and a relay number which is different from the slave number.

For example, when the slave **S11** sends the wireless signal including the alarming message, the relay **R** receives this wireless signal and then sends the wireless signal including the alarming message to the master **M1.** Hence, the wireless signal from the slave **S11** to the master **M1** is relayed by the relay **R.** Meanwhile, when the master **M1** sends the wireless signal (wireless signal including the message such as the alarming message and the periodically monitoring message), the relay **R** receives this wireless message and then sends the wireless signal including the alarming message to the slave **S11.** Hence, the wireless signal from the master **M1** to the slave **S11** is relayed by the relay **R.**

In this regard, when the plurality of masters **M1** to **M3** send the wireless signals successively in a similar manner of sending the wireless signal including the inspection start message, the timing at which the relay **R** relays this wireless signal is important.

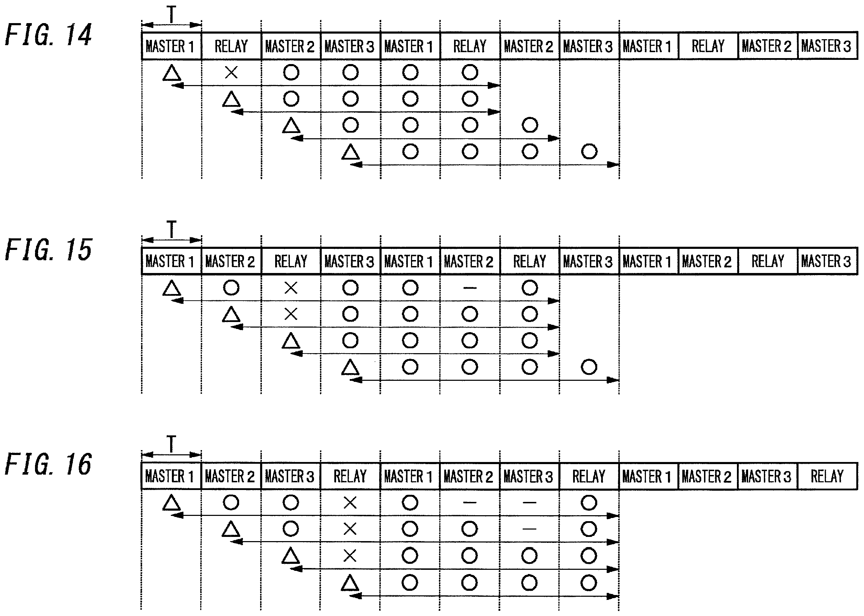

For example, it is assumed that the relay **R** sends (relays) the wireless signal after all the masters **M1** to **M3** complete sending the wireless signal. In this case, as shown in **FIG. 16****,** the master sending period is varied depending on the timing (the symbol "Δ" in the figure) of receiving the inspection start message from the monitoring device **X.** For example, as shown in the upmost chart in **FIG. 16****,** when the master **M2** receives the wireless signal first, the relay **R** fails to relay the wireless signal in the first sending period **T** allocated to the relay **R** because the master **M1** as a sender does not complete sending the wireless signal. Thus, the master **M3** sends the wireless signal after the master **M2** sends the wireless signal, and the master **M1** sends the wireless signal after a lapse of the sending period **T** of the relay **R,** and the relay **R** sends the wireless signal after a lapse of the sending periods **T** respectively allocated to the masters **M2** and **M3** which have already sent the wireless signals. Consequently, the total of the master sending periods **TM** falls within the range of **7*T** to **8*T.** In contrast, as shown in the downmost chart in **FIG. 16****,** when the master **M1** receives the wireless signal first, the masters **M2** and **M3** send the wireless signals after the master **M1** sends the wireless signal, and subsequently the relay **R** sends the wireless signal. Consequently, the total of the master sending periods **TM** falls within the range of **4*T** to **5*T.** Note that, in the remaining cases, the total of the master sending periods **TM** falls within the range of **5*T** to **6*T** or the range of **6*T** to **7*T** (see **FIG. 16**).

Next, it is assumed that the relay **R** sends (relays) the wireless signal after the masters **M1** and **M2** complete sending the wireless signal. As shown in the upmost chart in **FIG. 15****,** when the master **M2** sends the wireless signal first, the master **M3** and **M1** send the wireless signals successively in this order after a lapse of the sending period **T** of the relay **R** after the end of the sending period **T** of the master **M2,** and subsequently the relay **R** sends the wireless signal after a lapse of the sending period T of the master **M2** which has already sent the wireless signal. Consequently, the total of the master sending periods **TM** falls within the range of **6*T** to **7*T.** In contrast, as shown in the downmost chart in **FIG. 15****,** when the master **M1** sends the wireless signal first, the master **M2** sends the wireless signal after the master **M1** sends the wireless signal, and thereafter the relay **R** sends the wireless signal, and the master **M3** sends the wireless signal after the relay **R** sends the wireless signal. Consequently, the total of the master sending periods **TM** falls within the range of **4*T** to **5*T.** Note that, in the remaining cases, the total of the master sending periods **TM** falls within the range of **4*T** to **5*T** or the range of **5*T** to **6*T** (see **FIG. 15**).

Lastly, for example, it is assumed that the relay **R** sends (relays) the wireless signal after the master **M1** completes sending the wireless signal to be relayed by the relay **R** and before the next master **M2** sends the wireless signal. As shown in the upmost chart in **FIG. 14****,** when the master **M1** receives the inspection start message from the monitoring device **X** in a time period corresponding to the sending period of the master **M1,** the first master **M2** sends the wireless signal after a lapse of the sending period **T** of the relay **R,** and subsequently the masters **M3** and **M1** send the wireless signals successively in this order, and at last the relay **R** sends the wireless signal. Consequently, the total of the master sending periods **TM** falls within the range of **5*T** to **6*T.** Meanwhile, in the remaining cases, the masters **M1** to **M3** and the relay **R** can send the wireless signals successively in sequence. Therefore, in each of the remaining cases, the total of the master sending periods **TM** definitely falls within the range of **4*T** to **5*T** (see **FIG. 14**).

With regard to the wireless communication system of the present embodiment as mentioned above, preferably, the subsystem SSi includes the relay **R** configured to relay the wireless signal (first wireless signal) sent from the master **Mi** of this subsystem **SSi** to at least one of the slaves **Sij** of this subsystem **SSi,** and the relay **R** is configured to relay the wireless signal (first wireless signal) after the master **Mi** completes sending the wireless signal (first wireless signal) to be relayed and before the master **Mi** of another subsystem **SSi** starts to send the wireless signal (first wireless signal). In other words, the subsystem **SSi** includes the relay **R** configured to relay the first wireless signal from the master **Mi** to the slave **Sij.** The relay **R** is configured to, when receiving the first wireless signal from the master **Mi** included in the subsystem **SSi** to which this relay **R** belongs, send the first wireless signal to the slave **Sij** during an interval period for the first wireless signal. The interval period is defined as a period starting from time at which the master **Mi** included in the subsystem **SSi** to which the relay **R** belongs completes sending the first wireless signal and ending on time at which the next master **Mi** starts to send the first wireless signal.

As mentioned above, when the plurality of masters **M1** to **M3** send the wireless signals successively, the relay **R** sends (relays) the wireless signal after the master **M1** completes sending the wireless signal to be relayed and before the next master **M2** starts to send the wireless signal. Consequently, the total of the master sending periods **TM** can be shortened.

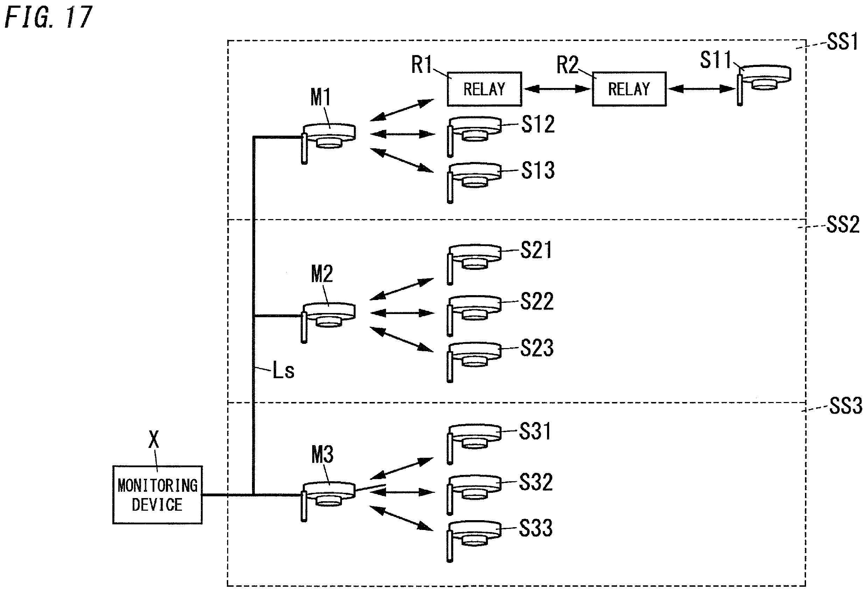

Additionally, as shown in **FIG. 17****,** it is possible to relay the wireless signal relayed by a relay **R1** by use of another relay **R2.**

For example, when the slave **S11** sends the wireless signal including the alarming message, the relay **R2** receives this wireless signal and then sends (relays) the wireless signal including the alarming message to the relay **R1,** and subsequently the relay **R1** receives this wireless signal and then sends the wireless signal including the alarming message to the master **M1.** Meanwhile, when the master **M1** sends the wireless signal (wireless signal including the message such as the alarming message and the periodically monitoring message), the relay **R1** receives this wireless signal and then sends the wireless signal including the alarming message to the relay **R2,** and subsequently the relay **R2** receives this wireless signal and then sends the wireless signal including the alarming message to the slave **S11.** Hence, the wireless signal from the master **M1** to the slave **S11** is relayed by the two relays **R1** and **R2.**

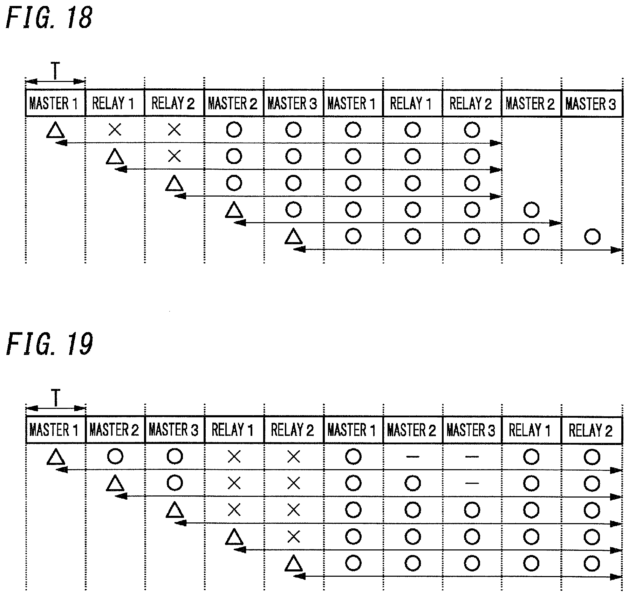

Also in a case where the wireless signal is relayed by the plurality of relays **R1** and **R2,** the relays **R1** and **R2** relay the wireless signal before the master **M1** completes sending the wireless signal to be relayed and before the next master **M2** starts to send the wireless signal as shown in **FIG. 18****.** Hence, in contrast to a configuration where the relays **R1** and **R2** relay the wireless signal after all the masters **M1** to **M3** complete sending the wireless signal as shown in **FIG. 19****,** the total of the master sending periods can be shortened.

## Claims

1. A wireless communication system comprising a plurality of subsystems (SSi, i = 1, 2, ...),
wherein:
each of the plurality of subsystems (SSi, i = 1, 2, ...) includes a single master (Mi, i = 1, 2, ...) and a slave (Sij, i,j = 1, 2, ...) configured to perform wireless communication with the master (Mi, i = 1, 2, ...);
the master (Mi, i = 1, 2, ...) is configured to send a first wireless signal in a first period (DT) common to the plurality of subsystems (SSi, i = 1, 2, ...) and to wait for receiving a second wireless signal in a second period (UT) which is subsequent to the first period (DT) and is common to the plurality of subsystems (SSi, i = 1, 2, ...);
the slave (Sij, i,j = 1, 2, ...) is configured to, when receiving the first wireless signal, send the second wireless signal in the second period (UT); and
the master (Mi, i = 1, 2, ...) is configured to send the first wireless signal in a period (Ti, i = 1, 2, ...) which is included in the first period (DT) but is different from that for the master (Mi, i = 1, 2, ...) of another subsystem (SSi, i = 1, 2, ...).

2. The wireless communication system as set forth in claim 1, wherein:
different frequency channels are respectively allocated to the plurality of subsystems (SSi, i = 1, 2, ...) ; and
the slave (Sij, i,j = 1, 2, ...) is configured to send the second wireless signal via the frequency channel allocated to the subsystem (SSi, i = 1, 2, ...) including this slave (Sij, i,j = 1, 2, ...).

3. The wireless communication system as set forth in claim 2, wherein
the master (Mi, i = 1, 2, ...) is configured to send the first wireless signal via the frequency channel allocated to the subsystem (SSi, i = 1, 2, ...) including this master (Mi, i = 1, 2, ...).

4. The wireless communication system as set forth in any one of claims 1 to 3, wherein:
the slave (Sij, i,j = 1, 2, ...) is configured to, each time a predetermined rest period elapses, judge whether the first wireless signal exists;
the slave (Sij, i,j = 1, 2, ...) is configured to, when concluding that the first wireless signal exists, start to receive the first wireless signal; and
the slave (Sij, i,j = 1, 2, ...) is configured to, based on a timing at which the slave (Sij, i,j = 1, 2, ...) receives the first wireless signal, adjust a start timing which is defined as a timing at which the slave (Sij, i,j = 1, 2, ...) starts the rest period, such that the start timing coincides with the start timing of another slave (Sij, i,j = 1, 2, ...) belonging to the subsystem (SSi, i = 1, 2, ...) including the former slave.

5. The wireless communication system as set forth in claim 4, wherein:
the master (Mi, i = 1, 2, ...) is configured to communicate with a master (Mi, i = 1, 2, ...) included in a different subsystem (SSi, i = 1, 2, ...) via a communication line (Ls); and
the master (Mi, i = 1, 2, ...) is configured to determine a period (Ti, i = 1, 2, ...) for sending the first wireless signal within the first period (DT), based on information obtained from the different subsystem (SSi, i = 1, 2, ...) via the communication line (Ls).

6. The wireless communication system as set forth in any one of claims 1 to 3, wherein
the master (Mi, i = 1, 2, ...) is configured to, when receiving instructions to send the first wireless signal, send the first wireless signal based on a timing of receiving the instructions.

7. The wireless communication system as set forth in any one of claims 1 to 3, wherein:
each of the subsystems (SSi, i = 1, 2, ...) includes the plurality of slaves (Sij, i,j = 1, 2, ...);
the master (Mi, i = 1, 2, ...) is configured to prepare a plurality of time slots in the second period (UT);
the master is configured to allocate the time slot to the slave (Sij, i,j = 1, 2, ...) included in the subsystem (SSi, i = 1, 2, ...) to which the master (Mi, i = 1, 2, ...) belongs;
the slave (Sij, i,j = 1, 2, ...) is configured to send the second wireless signal to the master (Mi, i = 1, 2, ...) included in the subsystem (SSi, i = 1, 2, ...) to which the slave (Sij, i,j = 1, 2, ...) belongs, by use of the allocated time slot;
the master (Mi, i = 1, 2, ...) is configured to judge whether a no-reply slave exists with regard to the slaves (Sij, i,j = 1, 2, ...) included in the subsystem (SSi, i = 1, 2, ...) to which the master (Mi, i = 1, 2, ...) belongs;
the no-reply slave is defined by the slave that sends the second wireless signal which the master (Mi, i = 1, 2, ...) fails to receive; and
the master (Mi, i = 1, 2, ...) is configured to, when concluding that the no-reply slave (Sij, i,j = 1, 2, ...) exists, change the time slot for the no-reply slave (Sij, i,j = 1, 2, ...) to an alternative time slot.

8. The wireless communication system as set forth in claim 7, wherein
the master (Mi, i = 1, 2, ...) is configured to select the alternative time slot from the plurality of time slots randomly.

9. The wireless communication system as set forth in claim 7, wherein
the master (Mi, i = 1, 2, ...) is configured to select, as the alternative time slot, the time slot adjacent to the time slot allocated to the no-reply slave (Sij, i,j = 1, 2, ...).

10. The wireless communication system as set forth in claim 7, wherein
the master (Mi, i = 1, 2, ...) is configured to, when concluding that the no-reply slave (Sij, i,j = 1, 2, ...) exists, exchange the time slot for the no-reply slave (Sij, i,j = 1, 2, ...) and the time slot allocated to the slave (Sij, i,j = 1, 2, ...) that sends the second wireless signal which the master successfully receives.

11. The wireless communication system as set forth in claim 10, wherein:
the master (Mi, i = 1, 2, ...) is configured to measure a reception level of the second wireless signal; and
the master (Mi, i = 1, 2, ...) is configured to, when concluding that the no-reply slave (Sij, i,j = 1, 2, ...) exists, exchange the time slot for the no-reply slave (Sij, i,j = 1, 2, ...) and the time slot allocated to the slave (Sij, i,j = 1, 2, ...) associated with the second wireless signal having the highest reception level.

12. The wireless communication system as set forth in claim 7, wherein:
the plurality of time slots include a spare time slot which is not allocated to any slave (Sij, i,j = 1, 2, ...); and
the master (Mi, i = 1, 2, ...) is configured to select the spare time slot as the alternative time slot.

13. The wireless communication system as set forth in claim 7, wherein:
the master (Mi, i = 1, 2, ...) is configured to judge whether non-electric-wave period is present in the second period (UT), the non-electric-wave period being defined as a period in which any slave in other subsystems (SSi, i = 1, 2, ...) sends no second wireless signal; and
the master (Mi, i = 1, 2, ...) is configured to, when concluding that the non-electric-wave period is present in the second period (UT), select the time slot corresponding to the non-electric-wave period as the alternative time slot.

14. The wireless communication system as set forth in claim 7, wherein:
the master (Mi, i = 1, 2, ...) is configured to measure a reception level of the second wireless signal from the slave (Sij, i,j = 1, 2, ...) belonging to another subsystem (SSi, i = 1, 2, ...) in the second period (UT);
the master (Mi, i = 1, 2, ...) is configured to judge whether a low electric wave period in which the measured reception level is not greater than a predetermined threshold is present in the second period (UT); and
the master (Mi, i = 1, 2, ...) is configured to, when concluding that the low electric wave period is present in the second period (UT), select the time slot corresponding to the low electric wave period as the alternative time slot.

15. The wireless communication system as set forth in any one of claims 1 to 3, wherein:
the subsystem (SSi, i = 1, 2, ...) includes a relay (R) configured to relay the first wireless signal from the master (Mi, i = 1, 2, ...) to the slave (Sij, i,j = 1, 2, ...);
the relay (R) is configured to, when receiving the first wireless signal from the master (Mi, i = 1, 2, ...) included in the subsystem (SSi, i = 1, 2, ...) to which this relay (R) belongs, send the first wireless signal to the slave (Sij, i,j = 1, 2, ...) during an interval period for the first wireless signal; and
the interval period is defined as a period starting from time at which the master (Mi, i = 1, 2, ...) included in the subsystem (SSi, i = 1, 2, ...) to which the relay (R) belongs completes sending the first wireless signal and ending on time at which the next master (Mi, i = 1, 2, ...) starts to send the first wireless signal.

## Patentansprüche

1. Drahtloses Kommunikationssystem umfassend eine Vielzahl an Untersystemen (SSi, i = 1, 2, ...),
wobei:
jedes der Vielzahl an Untersystemen (SSi, i = 1, 2, ...) einen einzelnen Master (Mi, i = 1, 2, ...) und einen Slave (Sij, i,j = 1, 2, ...) beinhaltet, konfiguriert, um eine drahtlose Kommunikation mit dem Master (Mi, i = 1, 2, ...) durchzuführen;
der Master (Mi, i = 1, 2, ...) konfiguriert ist, ein erstes drahtloses Signal in einem der Vielzahl an Untersystemen (SSi, i = 1, 2, ...) gemeinsamen ersten Zeitraum (DT) zu senden und in einem zweiten Zeitraum (UT), der nach dem ersten Zeitraum (DT) folgt und der Vielzahl an Untersystemen (SSi, i = 1, 2, ...) gemeinsam ist, und auf den Empfang eines zweiten drahtlosen Signals zu warten;
der Slave (Sij, i,j = 1, 2, ...) konfiguriert ist, wenn er das erste drahtlose Signal empfängt, das zweite drahtlose Signal in dem zweiten Zeitraum (UT) zu senden; und
der Master (Mi, i = 1, 2, ...) konfiguriert ist, das erste drahtlose Signal in einem Zeitraum (Ti, i = 1, 2, ...) zu senden, das im ersten Zeitraum (DT) enthalten ist, aber von dem für den Master (Mi, i = 1, 2, ...) eines anderen Untersystems (SSi, i = 1, 2, ...) verschieden ist.

2. Drahtloses Kommunikationssystem nach Anspruch 1, wobei:
verschiedene Frequenzkanäle jeweils der Vielzahl an Untersystemen (SSi, i = 1, 2, ...) zugeordnet werden; und
der Slave (Sij, i,j = 1, 2, ...) konfiguriert ist, das zweite drahtlose Signal über den Frequenzkanal, der dem diesen Slave (Sij, i,j = 1, 2, ...) beinhaltenden Untersystem (SSi, i = 1, 2, ...) zugeordnet ist, zu senden.

3. Drahtloses Kommunikationssystem nach Anspruch 2, wobei
der Master (Mi, i = 1,2, ...) konfiguriert ist, das erste drahtlose Signal über den Frequenzkanal, der dem diesen Master (Mi, i = 1, 2, ...) beinhaltenden Untersystem (SSi, i = 1, 2, ...) zugeordnet ist, zu senden.

4. Drahtloses Kommunikationssystem nach einem der Ansprüche 1 bis 3, wobei:
der Slave (Sij, i,j = 1, 2, ...) konfiguriert ist, jedes Mal, wenn eine vorbestimmte Ruhezeit verstreicht, zu beurteilen, ob das erste drahtlose Signal vorhanden ist;
der Slave (Sij, i,j = 1, 2, ...) konfiguriert ist, wenn er folgert, dass das erste drahtlose Signal vorhanden ist, zu beginnen, das erste drahtlose Signal zu empfangen; und
der Slave (Sij, i,j = 1, 2, ...) konfiguriert ist, auf der Grundlage eines Zeitpunkts, an dem der Slave (Sij, i,j = 1, 2, ...) das erste drahtlose Signal empfängt, einen Zeitpunkt anzupassen, der als Zeitpunkt definiert ist, an dem der Slave (Sij, i,j = 1, 2, ...) die Ruhezeit startet, so dass der Startzeitpunkt mit dem Startzeitpunkt eines anderen Slaves (Sij, i,j = 1, 2, ...), der zum Untersystem (SSi, i = 1, 2, ...) gehört, das den ersten Slave beinhaltet, übereinstimmt.

5. Drahtloses Kommunikationssystem nach Anspruch 4, wobei
der Master (Mi, i = 1, 2, ...) konfiguriert ist, mit einem Master (Mi, i = 1, 2, ...), der in einem unterschiedlichen Untersystem (SSi, i = 1, 2, ...) beinhaltet ist, über eine Kommunikationsleitung (Ls) zu kommunizieren; und
der Master (Mi, i = 1, 2, ...) konfiguriert ist, einen Zeitraum (Ti, i = 1, 2, ...) zu bestimmen zum Senden des ersten drahtlosen Signals innerhalb des ersten Zeitraums (DT), auf der Grundlage von Informationen aus dem verschiedenen Untersystem (SSi, i = 1, 2, ...) über die Kommunikationsleitung (Ls).

6. Drahtloses Kommunikationssystem nach einem der Ansprüche 1 bis 3, wobei der Master (Mi, i = 1, 2, ...) konfiguriert ist, um, wenn er Anweisungen empfängt, das erste drahtlose Signal zu senden, das erste drahtlose Signal zu senden auf der Grundlage eines Zeitpunkts des Empfangens der Anweisungen.

7. Drahtloses Kommunikationssystem nach einem der Ansprüche 1 bis 3, wobei jedes der Untersysteme (SSi, i = 1, 2, ...) eine Vielzahl an Slaves (Sij, i,j = 1, 2, ...) beinhaltet;
der Master (Mi, i = 1, 2, ...) konfiguriert ist, um eine Vielzahl an Zeitfenstern im zweiten Zeitraum (UT) vorzubereiten;
der Master konfiguriert ist, das Zeitfenster dem Slave (Sij, i,j = 1, 2, ...) zuzuordnen, der in dem Untersystem (SSi, i = 1, 2, ...) beinhaltet ist, zu dem der Master (Mi, i = 1, 2, ...) gehört;
der Slave (Sij, i,j = 1, 2, ...) konfiguriert ist, das zweite drahtlose Signal an den Master (Mi, i = 1, 2, ...) zu senden, der in dem Untersystem (SSi, i = 1, 2, ...) beinhaltet ist, zu dem der Slave (Sij, i,j = 1, 2, ...) gehört, durch Nutzung des zugeordneten Zeitfensters;
der Master (Mi, i = 1, 2, ...) konfiguriert ist, zu beurteilen, ob ein Keine-Antwort-Slave existiert in Bezug auf die in dem Untersystem (SSi, i = 1, 2, ...), zu dem der Master (Mi, i = 1, 2, ...) gehört, beinhalteten Slaves (Sij, i,j = 1, 2, ...);
der Keine-Antwort-Slave definiert wird durch den Slave, der das zweite drahtlose Signal sendet, das der Master (Mi, i = 1, 2, ...) nicht empfängt; und
der Master (Mi, i = 1, 2, ...) konfiguriert ist, wenn er folgert, dass der Keine-Antwort-Slave (Sij, i,j = 1, 2, ...) existiert, das Zeitfenster für den Keine-Antwort-Slave (Sij, i,j = 1, 2, ...) auf ein alternatives Zeitfenster zu ändern.

8. Drahtloses Kommunikationssystem nach Anspruch 7, wobei
der Master (Mi, i = 1, 2, ...) konfiguriert ist, das alternative Zeitfenster aus der Vielzahl der Zeitfenster zufällig auszuwählen.

9. Drahtloses Kommunikationssystem nach Anspruch 7, wobei
der Master (Mi, i = 1, 2, ...) konfiguriert ist, als alternatives Zeitfenster das benachbarte Zeitfenster des dem Keine-Antwort-Slave (Sij, i,j = 1, 2, ...) zugeordneten Zeitfensters auszuwählen.

10. Drahtloses Kommunikationssystem nach Anspruch 7, wobei
der Master (Mi, i = 1, 2, ...) konfiguriert ist, wenn er folgert, dass der Keine-Antwort-Slave existiert, das Zeitfenster für den Keine-Antwort-Slave (Sij, i,j = 1, 2, ...) und das dem Slave (Sij, i,j = 1, 2, ...) zugeordnete Zeitfenster, das das zweite drahtlose Signal sendet, das der Master erfolgreich empfängt, auszutauschen.

11. Drahtloses Kommunikationssystem nach Anspruch 7, wobei
der Master (Mi, i = 1, 2, ...) konfiguriert ist, einen Empfangspegel des zweiten drahtlosen Signals zu messen; und
der Master (Mi, i = 1, 2, ...) konfiguriert ist, wenn er folgert, dass der Keine-Antwort-Slave existiert, das Zeitfenster für den Keine-Antwort-Slave (Sij, i,j = 1, 2, ...) und das dem Slave (Sij, i,j = 1, 2, ...) zugeordnete Zeitfenster zugehörig zum zweiten drahtlosen Signal mit dem höchsten Empfangspegel auszutauschen.

12. Drahtloses Kommunikationssystem nach Anspruch 7, wobei
die Vielzahl der Zeitfenster ein zusätzliches Zeitfenster beinhaltet, das keinem Slave (Sij, i,j = 1, 2, ...) zugeordnet ist; und
der Master (Mi, i = 1, 2, ...) konfiguriert ist, das zusätzliche Zeitfenster als das alternative Zeitfenster auszuwählen.

13. Drahtloses Kommunikationssystem nach Anspruch 10, wobei
der Master (Mi, i = 1, 2, ...) konfiguriert ist, zu beurteilen, ob ein nichtelektrischer Wellenzeitraum im zweiten Zeitraum (UT) vorhanden ist, wobei der nicht-elektrische Wellenzeitraum als Zeitraum definiert ist, in dem kein Slave in anderen Untersystemen (SSi, i = 1, 2, ...) ein zweites drahtloses Signal sendet; und
der Master (Mi, i = 1, 2, ...) konfiguriert ist, wenn er folgert, dass der nichtelektrische Wellenzeitraum im zweiten Zeitraum (UT) vorhanden ist, das dem nicht-elektrischen Wellenzeitraum entsprechende Zeitfenster als das alternative Zeitfenster auszuwählen.

14. Drahtloses Kommunikationssystem nach Anspruch 7, wobei
der Master (Mi, i = 1, 2, ...) konfiguriert ist, einen Empfangspegel des zweiten drahtlosen Signals von dem Slave (Sij, i,j = 1, 2, ...), der zu einem anderen Untersystem (SSi, i = 1, 2, ...) im zweiten Zeitraum (UT) gehört, zu messen; und
der Master (Mi, i = 1, 2, ...) konfiguriert ist, zu beurteilen, ob ein niedrigelektrischer Wellenzeitraum, in dem der gemessene Empfangspegel nicht größer ist als ein vorbestimmter Grenzwert, im zweiten Zeittraum (UT) vorhanden ist; und
der Master (Mi, i = 1, 2, ...) konfiguriert ist, wenn er folgert, dass der niedrigelektrische Wellenzeitraum im zweiten Zeitraum (UT) vorhanden ist, das dem niedrig-elektrischen Wellenzeitraum entsprechende Zeitfenster als das alternative Zeitfenster auszuwählen.

15. Drahtloses Kommunikationssystem nach einem der Ansprüche 1 bis 3, wobei:
das Untersystem (SSi, i = 1, 2, ...) ein Relais (R) beinhaltet, um das erste drahtlose Signal vom Master (Mi, i = 1, 2, ...) zum Slave (Sij, i,j = 1, 2, ...) zu übertragen;
das Relais (R) konfiguriert ist, wenn das erste drahtlose Signal vom Master (Mi, i = 1, 2, ...), der in dem Untersystem (SSi, i = 1, 2, ...) beinhaltet ist, zu dem dieses Relais (R) gehört, empfangen wird, das erste drahtlose Signal an den Slave (Sij, i,j = 1, 2, ...) zu senden während eines Intervallzeitraums für das erste drahtlose Signal; und
der Intervallzeitraum als Zeitraum definiert ist, der zu dem Zeitpunkt beginnt, an dem der Master (Mi, i = 1, 2, ...), der in dem Untersystem (SSi, i = 1, 2, ...) beinhaltet ist, zu dem dieses Relais (R) gehört, das Senden des ersten drahtloses Signals beendet, und zu dem Zeitpunkt endet, an dem der nächste Master (Mi, i = 1, 2, ...) beginnt, das erste drahtlose Signal zu senden.

## Revendications

1. Système de communication sans fil comprenant une pluralité de systèmes secondaires (SSi, i = 1, 2, ...),
dans lequel :
chacun de la pluralité de systèmes secondaires (SSi, i = 1, 2, ...) inclut un seul maître (Mi, i = 1, 2, ...) et un esclave (Sij, i,j = 1, 2 ...) configuré pour réaliser une communication sans fil avec le maître (Mi, i = 1, 2, ...) ;
le maître (Mi, i = 1, 2, ...) est configuré pour envoyer un premier signal sans fil dans une première période (DT) commune à la pluralité de systèmes secondaires (SSi, i = 1, 2, ...) et pour attendre de recevoir un second signal sans fil dans une seconde période (UT) qui est subséquente à la première période (DT) et est commune à la pluralité de systèmes secondaires (SSi, i = 1, 2, ...) ;
l'esclave (Sij, i,j = 1, 2 ...) est configuré pour envoyer le second signal sans fil dans la seconde période (UT) lors de la réception du premier signal sans fil ; et
le maître (Mi, i = 1, 2, ...) est configuré pour envoyer le premier signal sans fil dans une période (Ti, i = 1, 2, ...) qui est inclue dans la première période (DT) mais est différente de celle pour le maître (Mi, i = 1, 2, ...) d'un autre système secondaire (SSi, i = 1, 2, ...).

2. Système de communication sans fil selon la revendication 1, dans lequel :
différents canaux de fréquence sont respectivement attribués à la pluralité de systèmes secondaires (SSi, i = 1, 2, ...) ; et
l'esclave (Sij, i,j = 1, 2 ...) est configuré pour envoyer le second signal sans fil par le biais du canal de fréquence attribué au système secondaire (SSi, i = 1, 2, ...) incluant cet esclave (Sij, i,j = 1, 2 ...).

3. Système de communication sans fil selon la revendication 2, dans lequel le maître (Mi, i = 1, 2 ...) est configuré pour envoyer le premier signal sans fil par le biais du canal de fréquence attribué au système secondaire (SSi, i = 1, 2, ...) incluant ce maître (Mi, i = 1, 2 ...).

4. Système de communication sans fil selon l'une quelconque des revendications 1 à 3, dans lequel :
l'esclave (Sij, i,j = 1, 2 ...) est configuré pour juger si le premier signal sans fil existe chaque fois qu'une période résiduelle prédéterminée s'écoule ;
l'esclave (Sij, i,j = 1, 2 ...) est configuré pour commencer à recevoir le premier signal sans fil lorsqu'il conclut que le premier signal sans fil existe ; et
l'esclave (Sij, i,j = 1, 2 ...) est configuré pour ajuster un moment de démarrage qui est défini comme un moment auquel l'esclave (Sij, i,j = 1, 2 ...) démarre la période résiduelle en fonction d'un moment auquel l'esclave (Sij, i,j = 1, 2 ...) reçoit le premier signal sans fil, de sorte que le moment de démarrage coïncide avec le moment de démarrage d'un autre esclave (Sij, i,j = 1, 2 ...) appartenant au système secondaire (SSi, i = 1, 2, ...) incluant l'ancien esclave.

5. Système de communication sans fil selon la revendication 4, dans lequel :
le maître (Mi, i = 1, 2 ...) est configuré pour communiquer avec un maître (Mi, i = 1, 2 ...) inclus dans un système secondaire différent (SSi, i = 1, 2, ...) par le biais d'une ligne de communication (Ls) ; et
le maître (Mi, i = 1, 2 ...) est configuré pour déterminer une période (Ti, i = 1, 2, ...) pour envoyer le premier signal sans fil dans la première période (DT) en fonction d'informations obtenues du système secondaire différent (SSi, i = 1, 2, ...) par le biais de la ligne de communication (Ls).

6. Système de communication sans fil selon l'une quelconque des revendications 1 à 3, dans lequel
le maître (Mi, i = 1, 2 ...) est configuré pour envoyer le premier signal sans fil en fonction d'un moment de réception d'instructions lors de la réception des instructions d'envoyer le premier signal sans fil.

7. Système de communication sans fil selon l'une quelconque des revendications 1 à 3, dans lequel :
chacun des systèmes secondaires (SSi, i = 1, 2, ...) inclut la pluralité d'esclaves (Sij, ij = 1, 2, ...) ;
le maître (Mi, i = 1, 2 ...) est configuré pour préparer une pluralité d'intervalles de temps dans la seconde période (UT) ;
le maître est configuré pour attribuer l'intervalle de temps à l'esclave (Sij, ij = 1, 2, ...) inclus dans le système secondaire (SSi, i = 1, 2, ...) auquel le maître (Mi, i = 1, 2, ...) appartient ;
l'esclave (Sij, ij = 1, 2, ...) est configuré pour envoyer le second signal sans fil au maître (Mi, i = 1, 2, ...) inclus dans le système secondaire (SSi, i = 1, 2, ...) auquel l'esclave (Sij, ij = 1, 2, ...) appartient en utilisant l'intervalle de temps attribué ;
le maître (Mi, i = 1, 2, ...) est configuré pour juger si un esclave sans réponse existe par rapport aux esclaves (Sij, ij = 1, 2, ...) inclus dans le système secondaire (SSi, i = 1, 2, ...) auquel le maître (Mi, i = 1, 2, ...) appartient ;
l'esclave sans réponse est défini par l'esclave qui envoie le second signal sans fil que le maître (Mi, i = 1, 2, ...) échoue de recevoir ; et
le maître (Mi, i = 1, 2, ...) est configuré pour changer l'intervalle de temps pour l'esclave sans réponse (Sij, ij = 1, 2, ...) en une variante d'intervalle de temps lorsqu'il conclut que l'esclave sans réponse (Sij, ij = 1, 2, ...) existe.

8. Système de communication sans fil selon la revendication 7, dans lequel
le maître (Mi, i = 1, 2 ...) est configuré pour sélectionner la variante d'intervalle de temps aléatoirement parmi la pluralité d'intervalles de temps.

9. Système de communication sans fil selon la revendication 7, dans lequel
le maître (Mi, i = 1, 2 ...) est configuré pour sélectionner comme la variante d'intervalle de temps l'intervalle de temps adjacent à l'intervalle de temps attribué à l'esclave sans réponse (Sij, ij = 1, 2, ...).

10. Système de communication sans fil selon la revendication 7, dans lequel
le maître (Mi, i = 1, 2, ...) est configuré pour échanger l'intervalle de temps pour l'esclave sans réponse (Sij, ij = 1, 2, ...) et l'intervalle de temps attribué à l'esclave (Sij, ij = 1, 2, ...) qui envoie le second signal sans fil que le maître reçoit avec succès lorsqu'il conclut que l'esclave sans réponse (Sij, ij = 1, 2, ...) existe.

11. Système de communication sans fil selon la revendication 10, dans lequel :
le maître (Mi, i = 1, 2, ...) est configuré pour mesurer un niveau de réception du second signal sans fil ; et
le maître (Mi, i = 1, 2, ...) est configuré pour échanger l'intervalle de temps pour l'esclave sans réponse (Sij, ij = 1, 2, ...) et l'intervalle de temps attribué à l'esclave (Sij, ij = 1, 2, ...) associé au second signal sans fil ayant le niveau de réception le plus élevé lorsqu'il conclut que l'esclave sans réponse (Sij, ij = 1, 2, ...) existe.

12. Système de communication sans fil selon la revendication 7, dans lequel :
la pluralité d'intervalles de temps inclut un intervalle de temps de rechange qui n'est pas attribué à un esclave quelconque (Sij, ij = 1, 2, ...) ; et
le maître (Mi, i = 1, 2, ...) est configuré pour sélectionner l'intervalle de temps de rechange comme la variante d'intervalle de temps.

13. Système de communication sans fil selon la revendication 7, dans lequel :
le maître (Mi, i = 1, 2, ...) est configuré pour juger si une période d'onde non électrique est présente dans la seconde période (UT), la période d'onde non électrique étant définie comme une période dans laquelle tout esclave dans d'autres systèmes secondaires (SSi, i = 1, 2, ...) n'envoie pas de second signal sans fil ; et
le maître (Mi, i = 1, 2, ...) est configuré pour sélectionner l'intervalle de temps correspondant à la période d'onde non électrique comme la variante d'intervalle de temps lorsqu'il conclut que la période d'onde non électrique est présente dans la seconde période (UT).

14. Système de communication sans fil selon la revendication 7, dans lequel :
le maître (Mi, i = 1, 2, ...) est configuré pour mesurer un niveau de réception du second signal sans fil provenant de l'esclave (Sij, ij = 1, 2, ...) appartenant à un autre système secondaire (SSi, i = 1, 2, ...) dans la seconde période (UT) ;
le maître (Mi, i = 1, 2, ...) est configuré pour juger si une période d'onde électrique faible dans laquelle le niveau de réception mesuré n'est pas supérieur à un seuil prédéterminé est présente dans la seconde période (UT) ; et
le maître (Mi, i = 1, 2, ...) est configuré pour sélectionner l'intervalle de temps correspondant à la période d'onde électrique faible comme la variante d'intervalle de temps lorsqu'il conclut que la période d'onde électrique faible est présente dans la seconde période (UT).

15. Système de communication sans fil selon l'une quelconque des revendications 1 à 3, dans lequel :
le système secondaire (SSi, i = 1, 2, ...) inclut un relais (R) configuré pour relayer le premier signal sans fil du maître (Mi, i = 1, 2, ...) à l'esclave (Sij, ij = 1,2, ...);
le relais (R) est configuré pour envoyer le premier signal sans fil à l'esclave (Sij, ij = 1, 2, ...) au cours d'une période d'intervalle pour le premier signal sans fil lors de la réception du premier signal sans fil du maître (Mi, i = 1, 2, ...) inclus dans le système secondaire (SSi, i = 1, 2, ...) auquel ce relais (R) appartient ; et
la période d'intervalle est définie comme une période démarrant à l'instant auquel le maître (Mi, i = 1, 2, ...) inclus dans le système secondaire (SSi, i = 1, 2, ...) auquel le relais (R) appartient termine l'envoi du premier signal sans fil et se terminant à l'instant auquel le maître suivant (Mi, i = 1, 2, ...) commence à envoyer le premier signal sans fil.
